# EUROPEAN PATENT APPLICATION

(11) **EP 4 804 000 A1**
(43) Date of publication of application: **09.09.2026**
(21) Application number: 24901119.8
(22) Date of filing: 06.12.2024
(51) Int. Cl.: G06F 3/0485, G06F 3/0482, G06F 3/04883, G06F 3/041

(54) **ELECTRONIC DEVICE AND SCROLL BAR DISPLAY METHOD USING SAME**

(30) Priority: 07.12.2023 KR 20230176555; 17.01.2024 KR 20240007571
(71) Applicant: Samsung Electronics Co., Ltd., Suwon-si, Gyeonggi-do 16677 (KR)
(72) Inventor: NAM, Seungwook, Suwon-si, Gyeonggi-do 16677 (KR); KANG, Taehyun, Suwon-si, Gyeonggi-do 16677 (KR); KIM, Sojin, Suwon-si, Gyeonggi-do 16677 (KR); BANG, Myojin, Suwon-si, Gyeonggi-do 16677 (KR); LEE, Jaemyoung, Suwon-si, Gyeonggi-do 16677 (KR); CHAE, Eunsun, Suwon-si, Gyeonggi-do 16677 (KR)
(74) Representative: Gulde & Partner
(86) International application number: PCT/KR2024/019925
(87) International publication number: WO 2025/121933

(57) **Abstract**

A scroll bar display method of the present disclosure comprises the operations of: displaying a part of a screen on a display; identifying, when a scroll input based on a touch input is detected, an area in which the touch input is detected from among a first area, a second area and a third area of the display; displaying, when it is identified that the touch input is detected in the first area of the display, a scroll b34-ar in a partial area of a first side surface of the display corresponding to the first area; displaying, when it is identified that the touch input is detected in the second area of the display, the scroll bar in a partial area of a second side surface of the display corresponding to a second area; and displaying, when it is identified that the touch input is detected in the third area of the display, the scroll bar in a default area from among a partial area of the first side surface and a partial area of the second side surface of the display.

## Description

### [Technical Field]

Embodiments of the present disclosure relate to an electronic device and a scroll bar display method using the same.

### [Background Art]

Recently, an electronic device may include a large-sized display, and a screen including various contents may be displayed through the large-sized display. When an amount of contents within a screen displayed through a large-sized display is large, an electronic device may use a scroll input to display contents at a desired location. When scrolling a screen using a scroll input, a user may scroll the screen using a finger of a hand gripping an electronic device.

Meanwhile, when an amount of contents within a screen is large, scrolling the screen only with a scroll input may have a limit, and in this case, the screen may be quickly scrolled by dragging a scroll bar.

The information described above may be provided as the related art for the purpose of enhancing the understanding of the present disclosure. No assertion or determination is made with respect to the applicability of any of the above-mentioned as the prior art related to the present disclosure.

### [Disclosure of Invention]

### [Technical Problem]

A scroll bar may be displayed in a designated area regardless of a hand gripping an electronic device, and a user may scroll a scroll bar displayed in a designated area by using a finger of a gripped hand in a state of gripping an electronic device with one hand. However, as a scroll bar is displayed only in a designated area, manipulation of a scroll bar may be difficult for a user with a short finger in a state of gripping an electronic device with one hand.

An electronic device according to various embodiments of the present disclosure may divide a display into a plurality of areas, and when a scroll input is detected, may identify an area where a starting point of the scroll input is detected from among the plurality of areas, and may display a scroll bar in a partial area of one side of a display corresponding to the identified area.

### [Solution to Problem]

According to an embodiment of the present disclosure, an electronic device may comprise a display, a memory storing instructions, and a processor. According to an embodiment, the instructions, when executed by the processor, may cause the electronic device to display a portion of a screen on the display. According to an embodiment, the instructions, when executed by the processor, may cause the electronic device to, when a scroll input based on a touch input is detected, identify an area where the touch input is detected from among a first area, a second area, and a third area of the display. According to an embodiment, the instructions, when executed by the processor, may cause the electronic device to, in case that the touch input is detected in the first area of the display, display a scroll bar in a partial area of a first side surface of the display corresponding to the first area. According to an embodiment, the instructions, when executed by the processor, may cause the electronic device to, in case that the touch input is detected in the second area of the display, display the scroll bar in a partial area of a second side surface of the display corresponding to the second area. According to an embodiment, the instructions, when executed by the processor, may cause the electronic device to, in case that the touch input is detected in the third area of the display, display the scroll bar in a default area from among the partial area of the first side surface and the partial area of the second side surface of the display.

According to an embodiment of the present disclosure, a scroll bar display method may comprise displaying a portion of a screen on a display. According to an embodiment, the scroll bar display method may comprise, when a scroll input based on a touch input is detected, identifying an area where the touch input is detected from among a first area, a second area, and a third area of the display. According to an embodiment, the scroll bar display method may comprise, in case that the touch input is detected in the first area of the display, displaying a scroll bar in a partial area of a first side surface of the display corresponding to the first area. According to an embodiment, the scroll bar display method may comprise, in case that the touch input is detected in the second area of the display, displaying the scroll bar in a partial area of a second side surface of the display corresponding to the second area. According to an embodiment, the scroll bar display method may comprise, in case that the touch input is detected in the third area of the display, displaying the scroll bar in a default area from among the partial area of the first side surface and the partial area of the second side surface of the display.

According to an embodiment of the present disclosure, a non-transitory computer-readable storage medium (or, a computer program product) storing one or more programs may be described. One or more programs according to an embodiment, when executed by a processor of an electronic device, may comprise an instruction to display a portion of a screen on a display. One or more programs according to an embodiment, when executed by a processor of an electronic device, may comprise an instruction to, when a scroll input based on a touch input is detected, identify an area where the touch input is detected from among a first area, a second area, and a third area of the display. One or more programs according to an embodiment, when executed by a processor of an electronic device, may comprise an instruction to, in case that the touch input is detected in the first area of the display, display a scroll bar in a partial area of a first side surface of the display corresponding to the first area. One or more programs according to an embodiment, when executed by a processor of an electronic device, may comprise an instruction to, in case that the touch input is detected in the second area of the display, display the scroll bar in a partial area of a second side surface of the display corresponding to the second area. One or more programs according to an embodiment, when executed by a processor of an electronic device, may comprise an instruction to, in case that the touch input is detected in the third area of the display, display the scroll bar in a default area from among the partial area of the first side surface and the partial area of the second side surface of the display.

### [Advantageous Effects of Invention]

An electronic device according to an embodiment of the present disclosure, by displaying a scroll bar in a partial area of one side of a display corresponding to an area where a starting point of a scroll input is detected from among a plurality of areas of a display, may enable a user to easily perform an operation of scrolling the screen using the scroll bar.

### [Brief Description of Drawings]

FIG. 1 is a block diagram of an electronic device within a network environment, according to an embodiment of the present disclosure.
FIG. 2 is a block diagram illustrating an electronic device, according to an embodiment of the present disclosure.
FIG. 3 is a flowchart for explaining a method for displaying a scroll bar, according to an embodiment of the present disclosure.
FIG. 4 is a flowchart for explaining a method for displaying a scroll bar, according to an embodiment of the present disclosure.
FIG. 5 is a flowchart for explaining a plurality of areas of a display, according to an embodiment of the present disclosure.
FIGS. 6A, 6B, and 6C are views for explaining a method for displaying a scroll bar, according to an embodiment of the present disclosure.
FIGS. 7A and 7B are flowcharts for explaining a method for displaying a scroll bar, according to an embodiment of the present disclosure.
FIGS. 8A, 8B, and 8C are views for explaining a method for displaying a scroll bar, according to an embodiment of the present disclosure.
FIGS. 9A and 9B are flowcharts for explaining a method for displaying a scroll bar, according to an embodiment of the present disclosure.
FIGS. 10A, 10B, and 10C are views for explaining a method for displaying a scroll bar, according to an embodiment of the present disclosure.
FIGS. 11A, 11B, and 11C are views for explaining a method for displaying a scroll bar, according to an embodiment of the present disclosure.
FIG. 12 is a view for explaining a scroll bar including at least one object, according to an embodiment of the present disclosure.
FIG. 13 is a view for explaining a method for displaying a scroll bar, according to an embodiment of the present disclosure.
FIGS. 14A and 14B are views for explaining a method for displaying a scroll bar, according to an embodiment of the present disclosure.
FIG. 15 is a view for explaining a method for displaying a scroll bar, according to an embodiment of the present disclosure.
FIG. 16 is a flowchart for explaining a method for displaying at least one object related to at least one function of a screen and/or at least one screen related to a function of an electronic device based on an area where a scroll bar is displayed, according to an embodiment of the present disclosure.
FIGS. 17A and 17B are views for explaining a method for displaying at least one object related to at least one function of a screen and/or at least one screen related to a function of an electronic device based on an area where a scroll bar is displayed, according to an embodiment of the present disclosure.
FIGS. 18A and 18B are views for explaining a method for displaying at least one object related to at least one function of a screen and/or at least one screen related to a function of an electronic device based on an area where a scroll bar is displayed, according to an embodiment of the present disclosure.
FIG. 19 is a view for explaining a method for displaying a scroll bar in a state where a size of a screen is reduced and displayed, according to an embodiment of the present disclosure.
FIG. 20 is a view for explaining a method in which an electronic device displays a scroll bar in a landscape mode, according to an embodiment of the present disclosure.
FIG. 21 is a view for explaining a method for displaying a scroll bar, according to an embodiment of the present disclosure.
FIG. 22 is a view for explaining a method for displaying a third-type scroll bar, according to an embodiment of the present disclosure.
FIG. 23 is a view for explaining a method for displaying a third-type scroll bar, according to an embodiment of the present disclosure.

### [Mode for the Invention]

Hereinafter, embodiments of the disclosure will be described in detail with reference to the accompanying drawings so that those skilled in the art to which the disclosure pertains can easily implement the disclosure. However, the disclosure may be implemented in various different forms and is not limited to embodiments set forth herein. With regard to the description of the drawings, the same or like reference signs may be used to designate the same or like elements. Also, in the drawings and the relevant descriptions, description of well-known functions and configurations may be omitted for the sake of clarity and brevity.

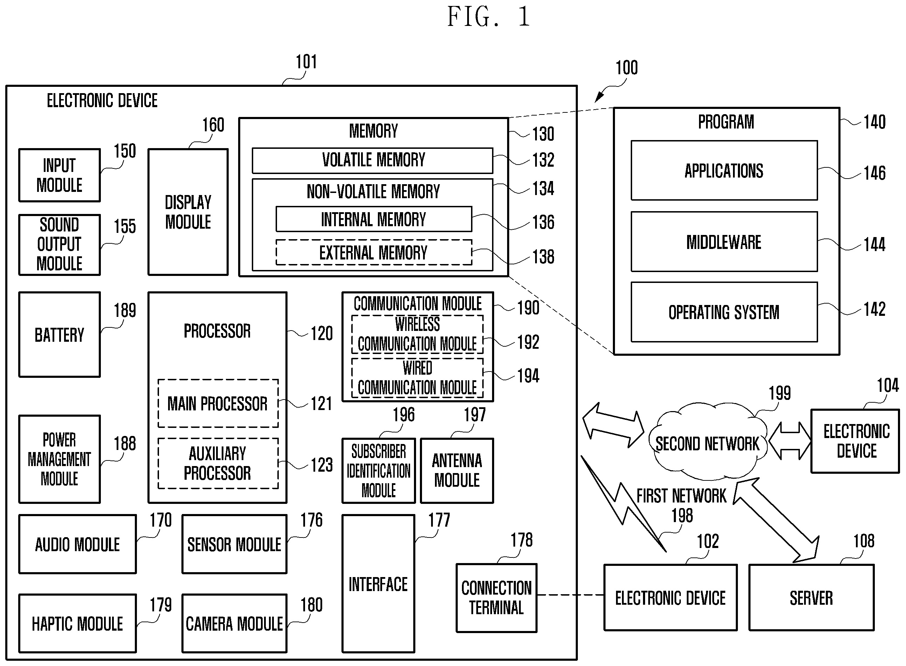

FIG. 1 is a block diagram illustrating an electronic device 101 in a network environment 100 according to various embodiments.

Referring to FIG. 1, an electronic device 101 in a network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connection terminal 178, a haptic module 179, a camera module 180, a power management module 188, a battery 189, a communication module 190, a subscriber identification module (SIM) 196, or an antenna module 197. In some embodiments, at least one of the components (e.g., the connection terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134. The non-volatile memory 134 may include an internal memory 136 and/or an external memory 138.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) (e.g., speaker or headphone) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., through wires) or wirelessly. According to an embodiment, the interface 177 may include, for example, a high-definition multimedia interface (HDMI), a universal serial bus (USB) interface, a secure digital (SD) card interface, or an audio interface.

The connection terminal 178 may include a connector via which the electronic device 101 may be physically connected with the external electronic device (e.g., the electronic device 102). According to an embodiment, the connection terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., an application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, Wi-Fi direct, or infrared data association (IrDA)) or the second network 199 (e.g., a long-range communication network, such as a legacy cellular network, a fifth generation (5G) network, a next-generation communication network, the Internet, or a computer network (e.g., LAN or wide area network (WAN))). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large-scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., an mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

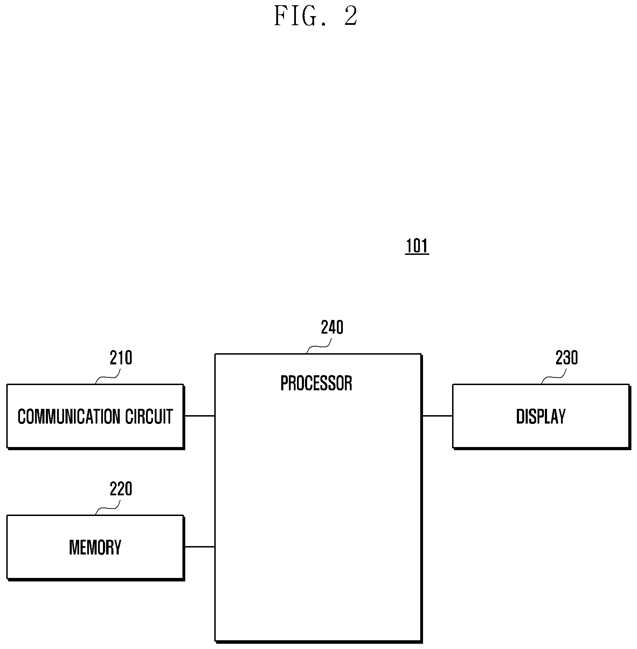

FIG. 2 is a block diagram illustrating an electronic device 101, according to an embodiment of the present disclosure.

With reference to FIG. 2, the electronic device 101 (e.g., the electronic device 101 of FIG. 1) may include a communication circuit 210 (e.g., the communication module 190 of FIG. 1), a memory 220 (e.g., the memory 130 of FIG. 1), a display 230 (e.g., the display module 160 of FIG. 1), and/or a processor 240 (e.g., the processor 120 of FIG. 1).

According to an embodiment of the present disclosure, the communication circuit 210 (e.g., the communication module 190 of FIG. 1) may control a communication connection between the electronic device 101 and at least one external electronic device (e.g., the electronic device 102 or the electronic device 104 of FIG. 1) (and/or a server (e.g., the server 108 of FIG. 1)) under control of the processor 240.

According to an embodiment of the present disclosure, the memory 220 (e.g., the memory 130 of FIG. 1) performs a function of storing a program (e.g., the program 140 of FIG. 1) for processing and control of the processor 240 of the electronic device 101, an operating system (OS) (e.g., the operating system 142 of FIG. 1), various applications, and/or input/output data, and may store a program for controlling overall operations of the electronic device 101. The memory 220 may store various setting information required during functional processing related to various embodiments of the present disclosure in the electronic device 101. The memory 220 may store executable instructions. For example, the memory 220, when executed by the processor 240, may store instructions for causing operations of the electronic device 101 to be performed. For example, the instructions may be stored in a computer readable recording medium. The recording medium may be tangible and non-transitory. The memory 220 and/or the recording medium may store one or more programs including the instructions.

In an embodiment, the memory 220 may store information related to a location of an area where a scroll bar is displayed. For example, the information related to the location of the area where the scroll bar is displayed may include information related to a state in which the scroll bar is displayed on a side surface of the display 230.

According to an embodiment of the present disclosure, the display 230 displays an image under control of the processor 240, and may be implemented as any one of a liquid crystal display (LCD), a light-emitting diode (LED) display, a micro LED (µLED) display, an organic light-emitting diode (OLED) display, an active matrix organic light-emitting diode (AMOLED) display, a micro electro mechanical systems (MEMS) display, an electronic paper display, a flexible display, a foldable display, or a rollable display. However, the present disclosure is not limited thereto.

In an embodiment, the display 230 may display a portion of a screen (or a user interface, a graphic user interface) under control of the processor 240.

In an embodiment, the display 230 may include a first area, a second area, and a third area which are a basis for determining an area where a scroll bar is displayed. The display 230 may display a scroll bar in a partial area of one side of the display 230 corresponding to an area where a touch input is detected from among the first area, the second area, and the third area, under control of the processor 240.

According to an embodiment of the present disclosure, the processor 240 may include, for example, a micro controller unit (MCU), and may control a plurality of hardware components connected to the processor 240 by driving an operating system (OS) or an embedded software program. The processor 240 may control a plurality of hardware components according to, for example, instructions (e.g., the program 140 of FIG. 1) stored in the memory 220.

In an embodiment, the processor 240 may display a portion of a screen (or a user interface, a graphic user interface) on the display 230. In an embodiment, a size (e.g., length) of a screen may be larger than a size (e.g., length) of the display 230, and accordingly, a state may be that a portion of an entire area of the screen is displayed on the display 230. When a scroll input based on a touch input is detected, the processor 240 may identify an area where the touch input is detected from among a first area, a second area, and a third area of the display 230. When it is identified that the touch input is detected in a first area of the display 230, the processor 240 may display a scroll bar in a partial area of a first side surface of the display 230 corresponding to the first area. For example, the first side surface of the display 230 may be a side surface adjacent to the first area of the display 230. When it is identified that the touch input is detected in a second area of the display 230, the processor 240 may display a scroll bar in a partial area of a second side surface of the display 230 corresponding to the second area. For example, the second side surface of the display 230 may be a side surface adjacent to the second area of the display 230. When it is identified that the touch input is detected in a third area of the display 230, the processor 240 may display a scroll bar in a default area from among a partial area of a first side surface and a partial area of a second side surface of the display 230.

The electronic device 101 according to an embodiment of the present disclosure may include a display 230, memory 220 storing instructions, and a processor 240. The instructions according to an embodiment, when executed by the processor 240, may cause the electronic device 101 to display a portion of a screen on the display 230. The instructions according to an embodiment, when executed by the processor 240, may cause the electronic device 101 to, when a scroll input based on a touch input is detected, identify an area where the touch input is detected from among a first area 510, a second area 520, and a third area 530 of the display 230. The instructions according to an embodiment, when executed by the processor 240, may cause the electronic device 101 to, in case that the touch input is detected in the first area 510 of the display 230, display a scroll bar in a partial area of a first side surface 230a of the display 230 corresponding to the first area 510. The instructions according to an embodiment, when executed by the processor 240, may cause the electronic device 101 to, in case that the touch input is detected in the second area 520 of the display 230, display the scroll bar in a partial area of a second side surface 230b of the display 230 corresponding to the second area 520. The instructions according to an embodiment, when executed by the processor 240, may cause the electronic device 101 to, in case that the touch input is detected in the third area 530 of the display 230, display the scroll bar in a default area from among a partial area of the first side surface 230a and a partial area of the second side surface 230b of the display.

The instructions according to an embodiment, when executed by the processor 240, may cause the electronic device 101 to, in a state where the scroll bar is displayed in a partial area of the first side surface 230a of the display 230, when a second scroll input based on a second touch input is detected, identify whether a designated time has elapsed. The instructions according to an embodiment, when executed by the processor 240, may cause the electronic device 101 to, in case that a designated time has not elapsed, identify an area where the second touch input is detected from among the first area 510, the second area 520, and the third area 530 of the display 230. The instructions according to an embodiment, when executed by the processor 240, may cause the electronic device 101 to, in case that the second touch input is detected in the first area 510, the second area 520, or the third area 530 of the display 230, maintain a state in which the scroll bar is displayed in the partial area of the first side surface 230a of the display 230.

The instructions according to an embodiment, when executed by the processor 240, may cause the electronic device 101 to, in case that a designated time has elapsed, remove display of the scroll bar from the partial area of the first side surface 230a of the display 230.

The instructions according to an embodiment, when executed by the processor 240, may cause the electronic device 101 to, in a state where a designated time has elapsed, identify an area where a second touch input is detected from among the first area 510, the second area 520, and the third area 530 of the display 230. The instructions according to an embodiment, when executed by the processor 240, may cause the electronic device 101 to, in case that the second touch input is detected in the first area 510 of the display 230, maintain an area to display the scroll bar as the partial area of the first side surface 230a of the display 230. The instructions according to an embodiment, when executed by the processor 240, may cause the electronic device 101 to, in case that the second touch input is detected in the second area 520 of the display 230, change an area to display the scroll bar to a partial area of the second side surface 230b of the display 230. The instructions according to an embodiment, when executed by the processor 240, may cause the electronic device 101 to, in case that the second touch input is detected in the third area 530 of the display 230, maintain an area to display the scroll bar as the partial area of the first side surface 230a of the display 230, based on location information of the scroll bar that had been displayed before the second scroll input based on the second touch input was detected.

The instructions according to an embodiment, when executed by the processor 240, may cause the electronic device 101 to, when an area to display the scroll bar is changed to the partial area of the second side surface 230b of the display 230, store information related to a location of the changed area where the scroll bar is displayed in the memory 220.

The instructions according to an embodiment, when executed by the processor 240, may cause the electronic device 101 to, in a state where the scroll bar is displayed in the partial area of the second side surface 230b of the display 230, when a second scroll input based on a second touch input is detected, identify whether a designated time has elapsed. The instructions according to an embodiment, when executed by the processor 240, may cause the electronic device 101 to, in case that a designated time has not elapsed, identify an area where the second touch input is detected from among the first area 510, the second area 520, and the third area 530 of the display 230. The instructions according to an embodiment, when executed by the processor 240, may cause the electronic device 101 to, in case that the second touch input is detected in the first area 510, the second area 520, or the third area 530 of the display 230, maintain a state in which the scroll bar is displayed in the partial area of the second side surface 230b of the display 230.

The instructions according to an embodiment, when executed by the processor 240, may cause the electronic device 101 to remove display of the scroll bar from the partial area of the second side surface 230b of the display 230.

The instructions according to an embodiment, when executed by the processor 240, may cause the electronic device 101 to, in a state where a designated time has elapsed, identify an area where a second touch input is detected from among the first area 510, the second area 520, and the third area 530 of the display 230. The instructions according to an embodiment, when executed by the processor 240, may cause the electronic device 101 to, in case that the second touch input is detected in the first area 510 of the display 230, change an area to display the scroll bar to the partial area of the first side surface 230a of the display 230. The instructions according to an embodiment, when executed by the processor 240, may cause the electronic device 101 to, in case that the second touch input is detected in the second area 520 of the display 230, maintain an area to display the scroll bar as the partial area of the second side surface 230b of the display 230. The instructions according to an embodiment, when executed by the processor 240, may cause the electronic device 101 to, in case that the second touch input is detected in the third area 530 of the display 230, maintain an area to display the scroll bar as the partial area of the second side surface 230b of the display 230, based on location information of the scroll bar that had been displayed before the second touch input was detected.

The instructions according to an embodiment, when executed by the processor 240, may cause the electronic device 101 to, when an area to display the scroll bar is changed to the partial area of the first side surface 230a of the display 230, store information related to a location of the changed area where the scroll bar is displayed in the memory 220.

The instructions according to an embodiment, when executed by the processor 240, may cause the electronic device 101 to, based on the information related to the location of the area where the scroll bar is displayed stored in the memory 220, display at least one of at least one object related to at least one function of a screen or at least one screen related to a function of the electronic device 101 on the display 230.

A length of the scroll bar displayed in the partial area of the first side surface 230a or the partial area of the second side surface 230b of the display 230 according to an embodiment may be variable.

The first area 510, the second area 520, and the third area 530 of the display 230 according to an embodiment may not overlap each other.

The third area 530 of the display 230 according to an embodiment may be an area for maintaining a state in which the scroll bar is displayed in the partial area of the first side surface 230a of the display 230 or the partial area of the second side surface 230b of the display 230, when the scroll bar is displayed in the partial area of the first side surface 230a of the display 230 or the partial area of the second side surface 230b of the display 230 based on detection of the touch input in the first area 510 or the second area 520 of the display 230.

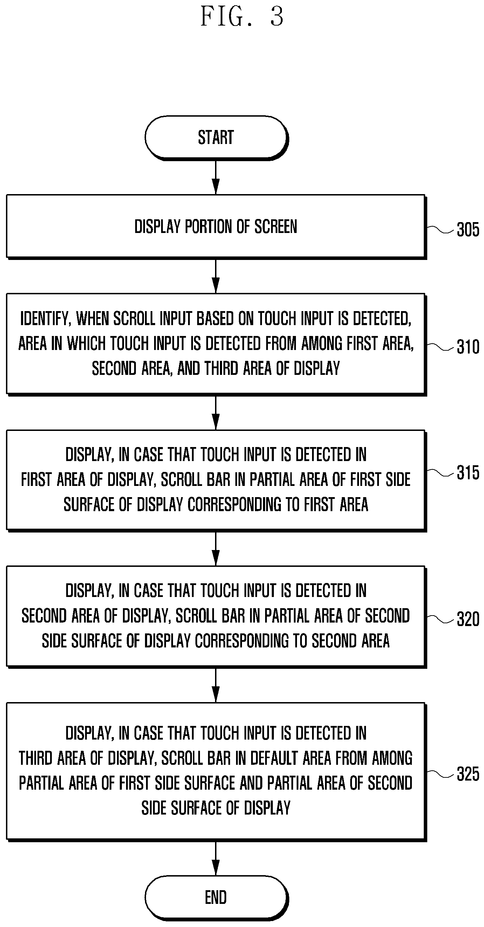

FIG. 3 is a flowchart for explaining a method for displaying a scroll bar, according to an embodiment of the present disclosure.

In the following embodiments, each operation of FIG. 3 may be performed sequentially, but is not necessarily performed sequentially. For example, an order of each operation of FIG. 3 may be changed, and at least two operations may be performed in parallel.

According to an embodiment, it may be understood that operations 305 to 325 of FIG. 3 are performed in a processor (e.g., the processor 240 of FIG. 2) of an electronic device (e.g., the electronic device 101 of FIG. 1).

With reference to FIG. 3, in operation 305, the processor 240 may display a portion of a screen (or a user interface, a graphic user interface) on a display (e.g., the display 230 of FIG. 2). In an embodiment, a size (e.g., length) of a screen may be larger than a size (e.g., length) of the display 230, and accordingly, a state may be that a portion of an entire area of the screen is displayed on the display 230.

In an embodiment, in operation 310, when a scroll input based on a touch input is detected, the processor 240 may identify an area where the touch input is detected from among a first area, a second area, and a third area of the display 230. For example, the first area, the second area, and the third area of the display 230 may be areas which are a basis for determining a location of the display 230 to display a scroll bar to be described later.

In an embodiment, the display 230 may be divided into a plurality of areas in a vertical direction. For example, a first area of the display 230 may be a left area when the display 230 is viewed from a front side. A second area of the display 230 may be a right area when the display 230 is viewed from a front side. A third area of the display 230 may be a center area when the display 230 is viewed from a front side. However, the present disclosure is not limited thereto.

In an embodiment, the first area, the second area, and the third area of the display 230 may be divided by a designated ratio. In an embodiment, the first area, the second area, and the third area of the display 230 may not overlap each other.

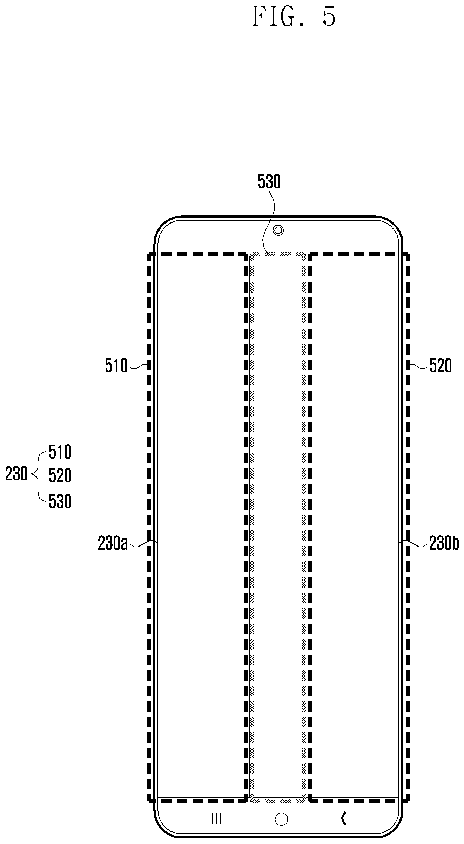

With respect to the aforementioned first area, second area, and third area of the display 230, it will be examined in detail in FIG. 5 to be described later.

In an embodiment, in a memory (e.g., the memory 220 of FIG. 2), when a scroll input based on a touch input is detected, information on a default area (e.g., a partial area of a first side surface of the display 230 or a partial area of a second side surface of the display 230) for displaying a scroll bar according to detection of the touch input in the first area, the second area, or the third area of the display 230 may be stored. The default area may mean an area initially set to display a scroll bar (e.g., a partial area of a first side surface or a partial area of a second side surface of the display 230) (e.g., an area pre-programmed (or set, or defined) in the electronic device 101 before an initial touch input is detected). For example, when a touch input is detected in the first area of the display 230, a scroll bar may be set as a default to be displayed in a partial area of the first side surface of the display 230. As another example, when a touch input is detected in the second area of the display 230, a scroll bar may be set as a default to be displayed in a partial area of the second side surface of the display 230. As another example, when a touch input is detected in the third area of the display 230, a scroll bar may be set as a default to be displayed in a partial area of the first side surface or a partial area of the second side surface of the display 230. However, the present disclosure is not limited thereto.

In an embodiment, in operation 315, in case that a touch input is detected in the first area of the display 230, the processor 240 may display a scroll bar in a partial area of the first side surface of the display 230 corresponding to the first area. For example, the first side surface of the display 230 may be a side surface adjacent to the first area of the display 230. For example, when a touch input is detected in the first area of the display 230, the processor 240 may display a scroll bar on the first side surface adjacent to the first area. For example, when a touch input is detected in the first area of the display 230, the processor 240 may display a scroll bar on the first side surface of the display 230 adjacent to the first area based on the information on the default area stored in the memory 220.

In an embodiment, in operation 320, in case that a touch input is detected in the second area of the display 230, the processor 240 may display a scroll bar in a partial area of the second side surface of the display 230 corresponding to the second area. For example, the second side surface of the display 230 may be a side surface adjacent to the second area of the display 230. For example, when a touch input is detected in the second area of the display 230, the processor 240 may display a scroll bar on the second side surface adjacent to the second area. For example, when a touch input is detected in the second area of the display 230, the processor 240 may display a scroll bar on the second side surface of the display 230 adjacent to the second area based on the information on the default area stored in the memory 220.

In an embodiment, in operation 325, in case that a touch input is detected in the third area of the display 230, the processor 240 may display a scroll bar in the default area from among a partial area of the first side surface and a partial area of the second side surface of the display 230. For example, when a touch input is detected in the third area of the display 230, the processor 240 may display a scroll bar on the first side surface or the second side surface of the display 230 adjacent to the first area or the second area based on the information on the default area stored in the memory 220.

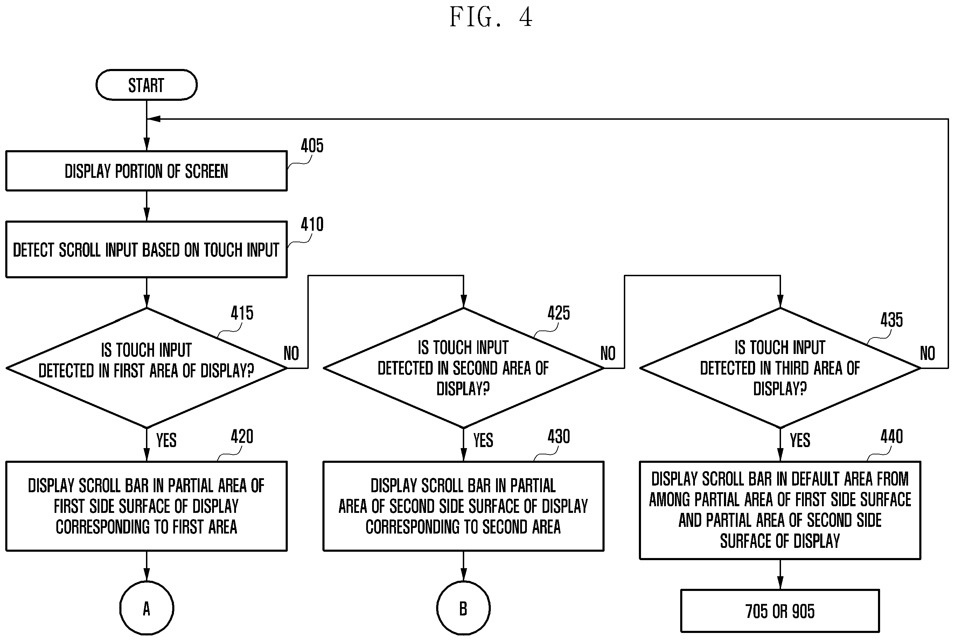

FIG. 4 is a flowchart for explaining a method for displaying a scroll bar, according to an embodiment of the present disclosure.

In the following embodiments, each operation of FIG. 4 may be performed sequentially, but is not necessarily performed sequentially. For example, an order of each operation of FIG. 4 may be changed, and at least two operations may be performed in parallel.

According to an embodiment, it may be understood that operations 405 to 440 of FIG. 4 are performed in a processor (e.g., the processor 240 of FIG. 2) of an electronic device (e.g., the electronic device 101 of FIG. 1).

FIG. 4 according to various embodiments is a view specifying each operation of FIG. 3 described above.

With reference to FIG. 4, in operation 405, the processor 240 may display a portion of a screen on a display (e.g., the display 230 of FIG. 2). For example, a size (e.g., length) of the screen may be larger than a size (e.g., length) of the display 230, and accordingly, a state may be that a portion of an entire area of the screen is displayed on the display 230.

In an embodiment, in a memory (e.g., the memory 220 of FIG. 2), when a scroll input based on a touch input is detected, information on a default area (e.g., a partial area of a first side surface of the display 230 or a partial area of a second side surface of the display 230) for displaying a scroll bar according to detection of the touch input in the first area, the second area, or the third area of the display 230 may be stored. The default area may mean an area pre-programmed (or set, or defined) in the electronic device 101 before an initial touch input is detected to display a scroll bar. For example, when a touch input is detected in the first area of the display 230, a scroll bar may be set as a default to be displayed in a partial area of the first side surface of the display 230. As another example, when a touch input is detected in the second area of the display 230, a scroll bar may be set as a default to be displayed in a partial area of the second side surface of the display 230. As another example, when a touch input is detected in the third area of the display 230, a scroll bar may be set as a default to be displayed in a partial area of the first side surface or a partial area of the second side surface of the display 230. However, the present disclosure is not limited thereto.

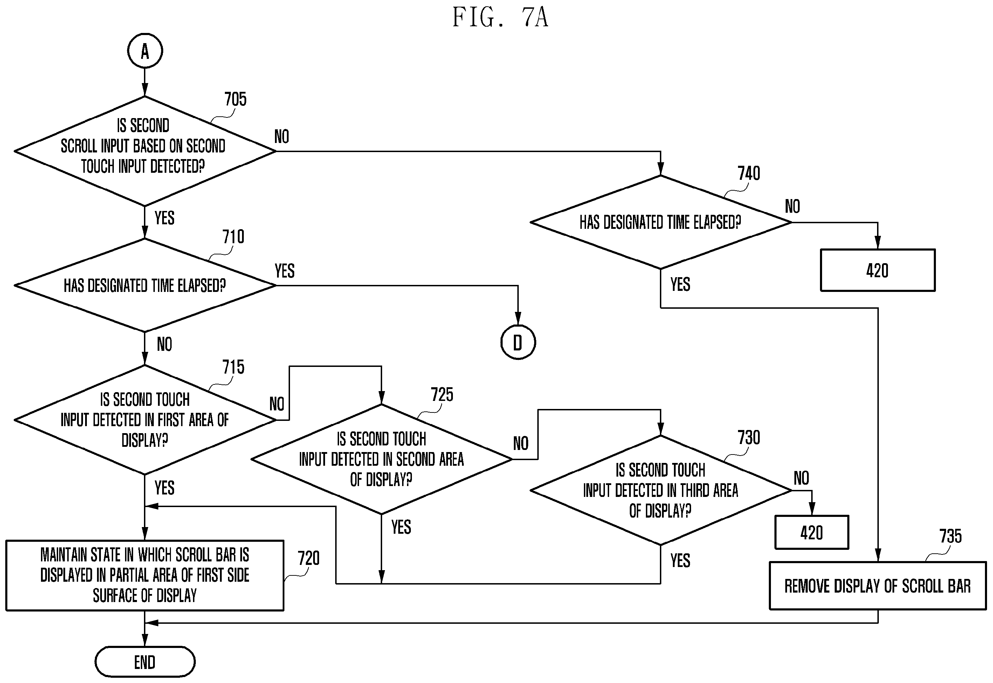

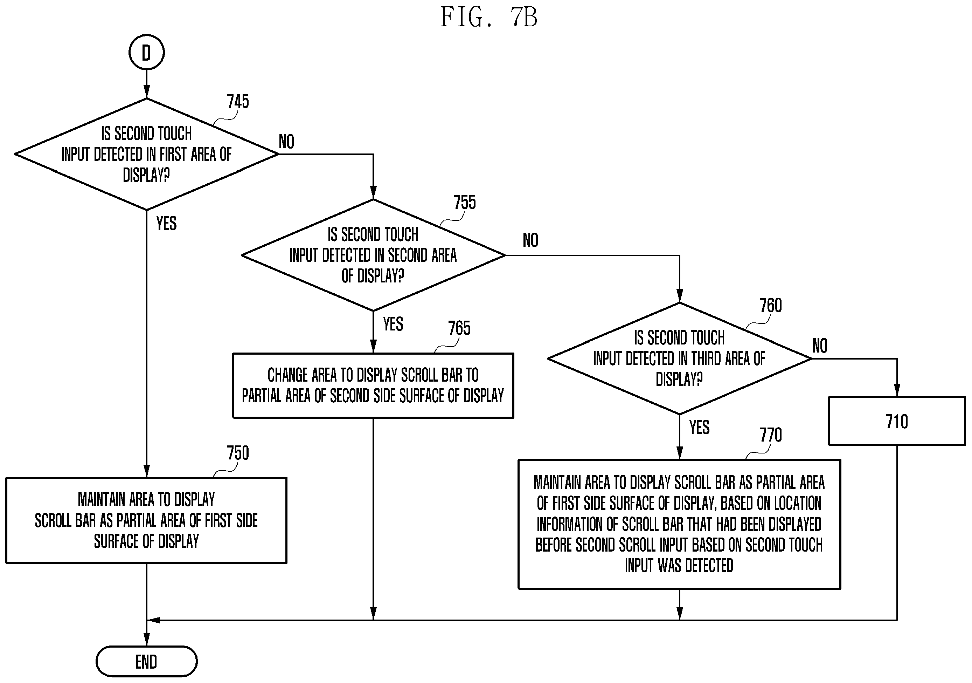

In an embodiment, in operation 410, the processor 240 may detect a scroll input based on a touch input. In operation 415, the processor 240 may identify whether a touch input is detected in a first area (e.g., a left area when the display 230 is viewed from a front side) of the display 230. When a touch input is detected in the first area of the display 230 (e.g., YES in operation 415), in operation 420, the processor 240 may display a scroll bar in a partial area of the first side surface of the display 230 corresponding to the first area. For example, the first side surface of the display 230 may be a side surface adjacent to the first area of the display 230. Thereafter, the processor 240 may perform operations of FIGS. 7A and 7B.

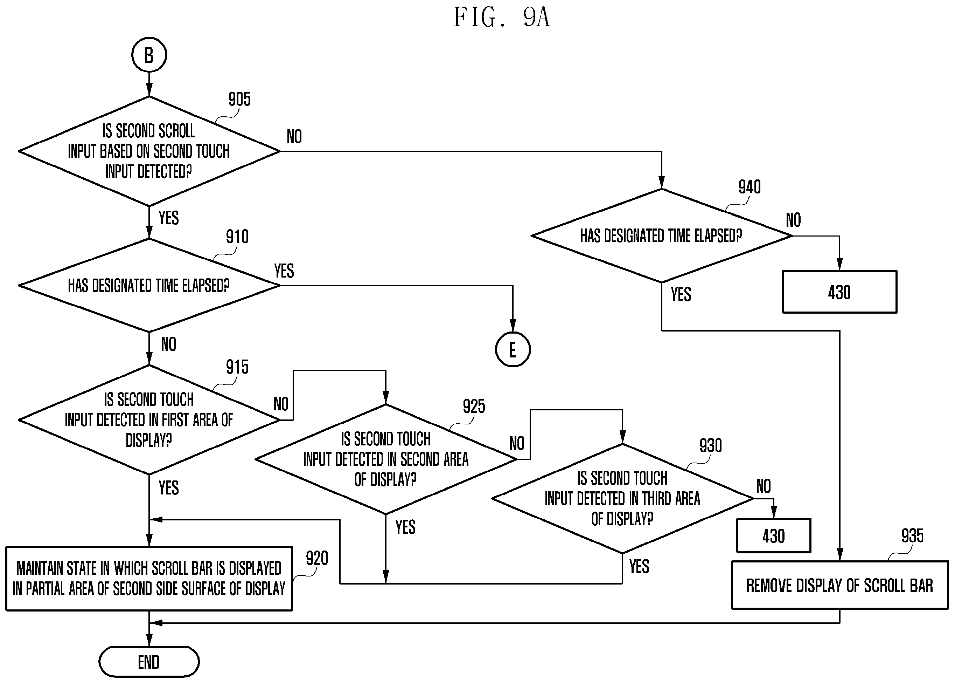

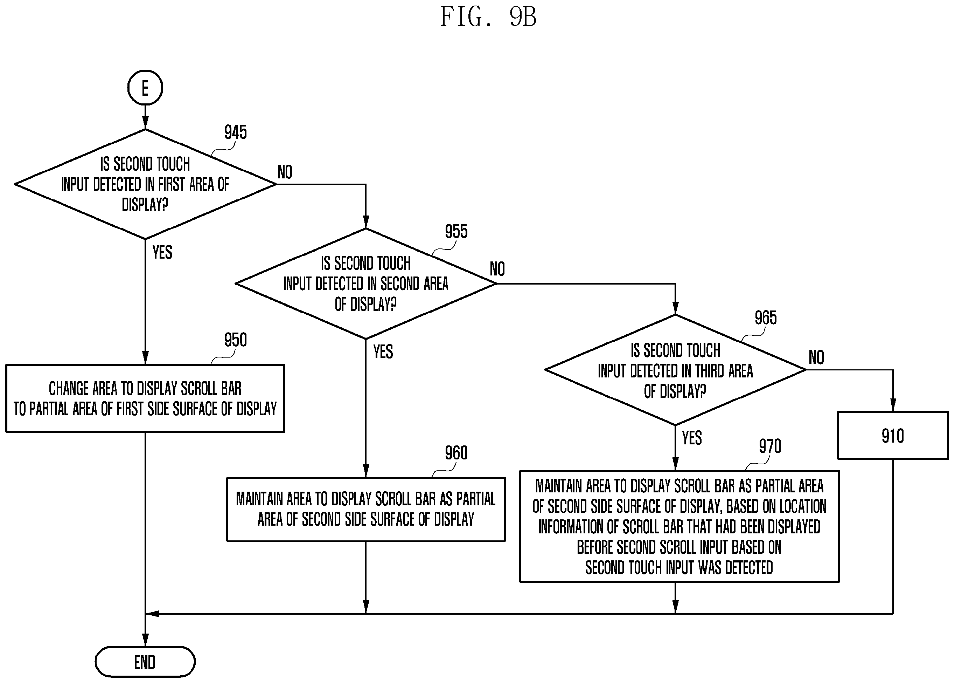

In an embodiment, when a touch input is not detected in the first area of the display 230 (e.g., NO in operation 415), in operation 425, the processor 240 may identify whether a touch input is detected in a second area (e.g., a right area when the display 230 is viewed from a front side) of the display 230. When a touch input is detected in the second area of the display 230 (e.g., YES in operation 425), the processor 240 may display a scroll bar in a partial area of the second side surface of the display 230 corresponding to the second area. For example, the second side surface of the display 230 may be a side surface adjacent to the second area of the display 230. Thereafter, the processor 240 may perform operations of FIGS. 9A and 9B.

In an embodiment, when a touch input is not detected in the second area of the display 230 (e.g., NO in operation 425), in operation 435, the processor 240 may identify whether a touch input is detected in a third area (e.g., a center area when the display 230 is viewed from a front side) of the display 230. When a touch input is detected in the third area of the display 230 (e.g., YES in operation 435), in operation 440, the processor 240 may display a scroll bar in the default area from among a partial area of the first side surface of the display 230 and a partial area of the second side surface of the display 230. Thereafter, the processor 240 may perform operations of FIGS. 7A and 7B or operations of FIGS. 9A and 9B. For example, when the default area is a partial area of the first side surface of the display 230, when a touch input is detected in the third area of the display 230, the processor 240 may display a scroll bar in a partial area of the first side surface of the display 230, and then may perform operations of FIGS. 7A and 7B. As another example, when the default area is a partial area of the second side surface of the display 230, when a touch input is detected in the third area of the display 230, the processor 240 may display a scroll bar in a partial area of the second side surface of the display 230, and then may perform operations of FIGS. 9A and 9B.

In an embodiment, when a touch input is not detected in the third area of the display 230 (e.g., NO in operation 435), the processor 240 may branch to operation 405 and may continue to perform an operation of displaying a portion of a screen.

FIG. 5 is a flowchart for explaining a plurality of areas 510, 520, and 530 of the display 230, according to an embodiment of the present disclosure.

With reference to FIG. 5, a display (e.g., the display 230 of FIG. 2) of an electronic device (e.g., the electronic device 101 of FIG. 1) may include a plurality of areas. For example, the plurality of areas may include a first area 510, a second area 520, and a third area 530. However, the present disclosure is not limited thereto.

In an embodiment, the first area 510, the second area 520, and the third area 530 of the display 230 may be areas divided in a vertical direction. For example, a first area of the display 230 may be a left area when the display 230 is viewed from a front side. A second area of the display 230 may be a right area when the display 230 is viewed from a front side. A third area of the display 230 may be a center area when the display 230 is viewed from a front side. However, the present disclosure is not limited thereto.

In an embodiment, the first area 510, the second area 520, and the third area 530 of the display 230 may not overlap each other.

In an embodiment, the first area 510, the second area 520, and the third area 530 of the display 230 may be divided by a designated ratio. For example, based on a horizontal length of the display 230, the first area 510, the second area 520, and the third area 530 of the display 230 may be divided in a 4:2:4 ratio. However, the present disclosure is not limited thereto.

In an embodiment, the plurality of areas (e.g., the first area 510, the second area 520, and the third area 530) of the display 230, when a scroll input based on a touch input is detected, may be areas serving as a basis for determining a location (or an area) of the display 230 for displaying a scroll bar. For example, when a touch input is detected in the first area 510 from among the plurality of areas of the display 230, a processor (e.g., the processor 240 of FIG. 2) may display a scroll bar in a partial area of a first side surface 230a of the display 230 corresponding to the first area 510. As another example, when a touch input is detected in the second area 520 from among the plurality of areas of the display 230, the processor 240 may display a scroll bar in a partial area of a second side surface 230b of the display 230 corresponding to the second area 520. As yet another example, when a touch input is detected in the third area 530 from among the plurality of areas of the display 230, the processor 240 may display a scroll bar in a partial area of the first side surface 230a of the display 230 or a partial area of the second side surface 230b of the display 230. For example, when a touch input is detected in the third area 530 from among the plurality of areas of the display 230, the processor 240 may display a scroll bar in the default area (e.g., a partial area of the first side surface 230a of the display 230 or a partial area of the second side surface 230b of the display 230).

In an embodiment, the third area 530 of the display 230, when a scroll bar is displayed in a partial area of the first side surface 230a of the display 230 or a partial area of the second side surface 230b of the display 230 based on a touch input being detected in the first area 510 or the second area 520 of the display 230, may be an area for maintaining a state in which the scroll bar is displayed in the partial area of the first side surface 230a of the display 230 or the partial area of the second side surface 230b of the display 230.

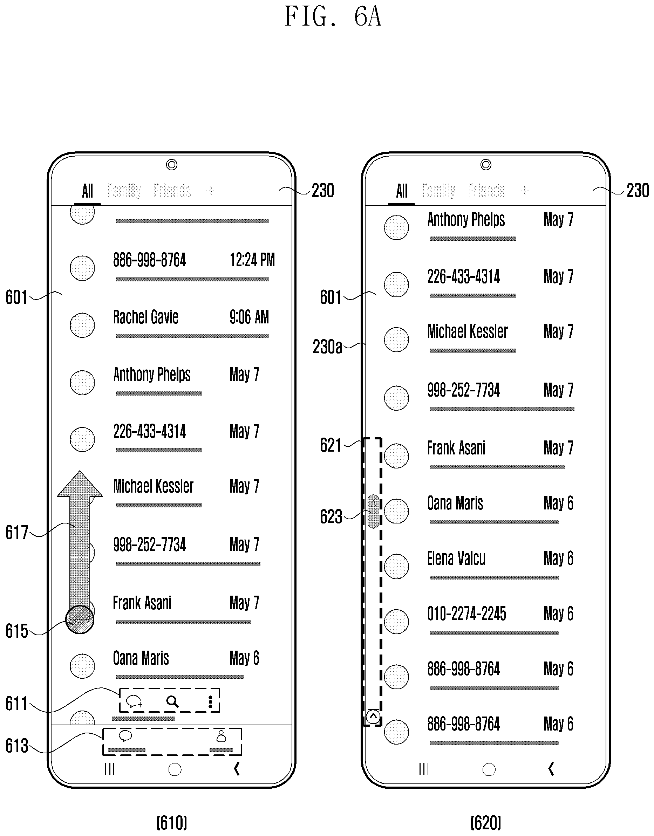

With respect to a configuration for determining a location (e.g., an area) of the display 230 for displaying a scroll bar based on an area of the display 230 where the aforementioned touch input is detected, various embodiments will be described in FIGS. 6A to 23 to be described later.

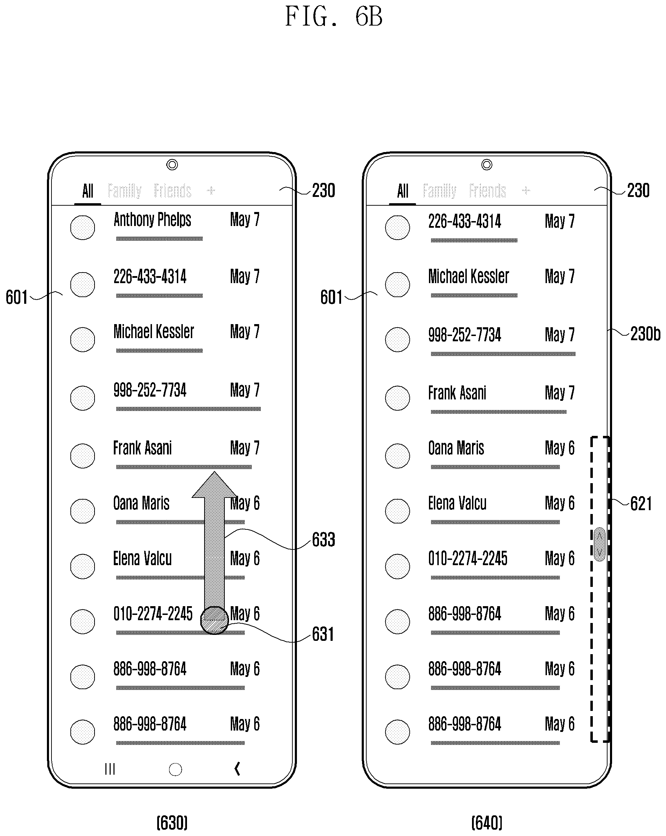

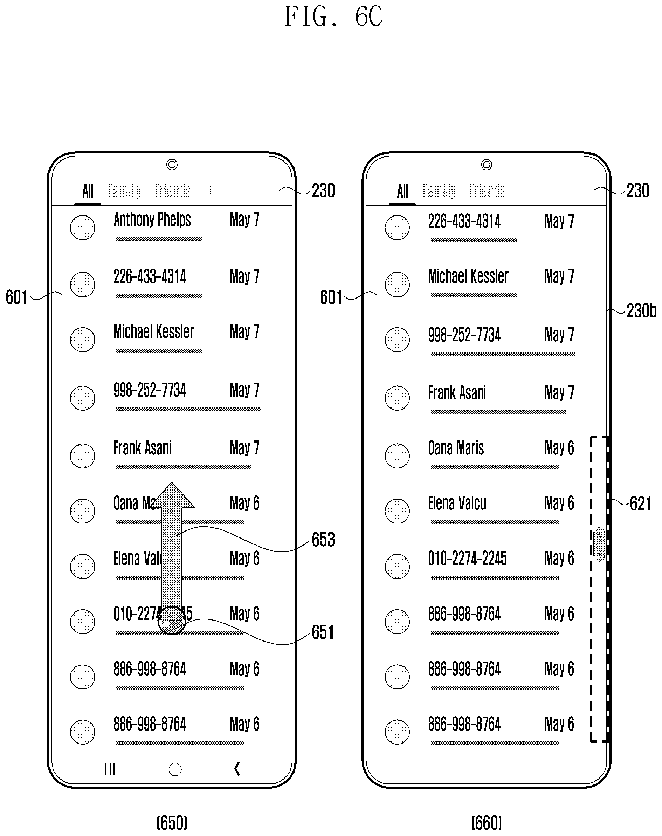

FIGS. 6A, 6B, and 6C are views for explaining a method for displaying a scroll bar, according to an embodiment of the present disclosure.

With reference to reference numeral <610> of FIG. 6A, a processor (e.g., the processor 240 of FIG. 2) of an electronic device (e.g., the electronic device 101 of FIG. 1) may display a portion of a screen 601 on a display (e.g., the display 230 of FIG. 2). For example, the screen 601 may be a screen related to a message application. However, the present disclosure is not limited thereto. In an embodiment, a size (e.g., length) of the screen 601 may be larger than a size (e.g., length) of the display 230, and accordingly, a state may be that a portion of an entire area of the screen 601 is displayed on the display 230.

In an embodiment, the processor 240 may further display on the display 230, together with the screen 601, at least one object related to the screen 601 (e.g., at least one first object 611 (e.g., an object for creating a new message, an object for searching for a message, and/or an object related to message settings) and/or at least one second object 613 (e.g., an object for displaying a chat window list screen, an object for displaying a contact screen)).

In an embodiment, the processor 240 may detect a scroll input 617 based on a touch input 615. When a scroll input is detected, the processor 240 may display another portion of an entire area of the screen 601 on the display 230 by moving the screen 601 in a direction in which the scroll input is detected. In this case, a portion of the screen 601 and another portion of the screen 601 may include an overlapping area, or may not include an overlapping area.

In an embodiment, the processor 240 may identify an area of the display 230 where a touch input 615 is detected. For example, as examined in FIG. 5 described above, the display 230 may include a plurality of areas (e.g., the first area 510, the second area 520, the third area 530). The processor 240 may identify an area where the touch input 615 is detected from among the plurality of areas of the display 230. As illustrated in reference numeral <610>, when a touch input 615 is detected in the first area 510 from among the plurality of areas (e.g., the first area 510, the second area 520, the third area 530) of the display 230, as illustrated in reference numeral <620> of FIG. 6A, the processor 240 may display a scroll bar 621 in a partial area of a first side surface (e.g., the first side surface 230a of FIG. 5) of the display 230 corresponding to the first area 510.

In an embodiment, the scroll bar 621 may include an indicator 623 indicating a location of a portion of the screen 601 being displayed on the display 230. The indicator 623 included in the scroll bar 621 may be movable by a user. The processor 240 may, when an input for moving the indicator 623 in a specific direction is detected, move the screen 601 in the specific direction and display the same on the display 230.

In an embodiment, a length of the scroll bar 621 displayed on the display 230 and a location where the scroll bar 621 is displayed (e.g., a location on a side surface of the display 230 where the scroll bar 621 is displayed) may vary based on the scroll input 617 based on the touch input 615.

With reference to reference numeral <630> of FIG. 6B according to an embodiment, a scroll input 633 based on a touch input 631 may be detected. The processor 240 may identify an area where the touch input 631 is detected from among the plurality of areas of the display 230. When the touch input 631 is detected in the second area 520 from among the plurality of areas (e.g., the first area 510, the second area 520, and the third area 530) of the display 230, as illustrated in reference numeral <640> of FIG. 6B, the processor 240 may display the scroll bar 621 in a partial area of the second side surface (e.g., the second side surface 230b of FIG. 5) of the display 230 corresponding to the second area 520.

With reference to reference numeral <650> of FIG. 6C according to an embodiment, a scroll input 653 based on a touch input 651 may be detected. The processor 240 may identify an area where the touch input 651 is detected from among the plurality of areas of the display 230. When the touch input 651 is detected in the third area 530 from among the plurality of areas (e.g., the first area 510, the second area 520, and the third area 530) of the display 230, the processor 240 may display a scroll bar in a default area from among a partial area of the first side surface 230a of the display 230 and a partial area of the second side surface 230b of the display 230. For example, when the default area is a partial area of the second side surface 230b of the display 230, as illustrated in reference numeral <660> of FIG. 6C, the processor 240 may display the scroll bar 621 in the partial area of the second side surface 230b of the display 230 corresponding to the second area 520 of the display 230. The present disclosure is not limited thereto, and when the default area is a partial area of the first side surface 230a of the display 230, as illustrated in reference numeral <620> of FIG. 6A, the processor 240 may display the scroll bar 621 in the partial area of the first side surface 230a of the display 230 corresponding to the first area 510 of the display 230.

FIGS. 7A and 7B are flowcharts for explaining a method for displaying a scroll bar, according to an embodiment of the present disclosure.

In the following embodiments, each operation of FIGS. 7A and 7B may be performed sequentially, but is not necessarily performed sequentially. For example, an order of each operation of FIGS. 7A and 7B may be changed, and at least two operations may be performed in parallel.

According to an embodiment, it may be understood that operations 705 to 770 of FIGS. 7A and 7B are performed in the processor (e.g., the processor 240 of FIG. 2) of the electronic device (e.g., the electronic device 101 of FIG. 1).

FIGS. 7A and 7B according to various embodiments may be an additional operation of operation 420 of FIG. 4 described above. The present disclosure is not limited thereto, and FIGS. 7A and 7B according to various embodiments may also be an additional operation of operation 440 of FIG. 4 described above.

With reference to FIGS. 7A and 7B, in operation 705, the processor 240 may identify whether a second scroll input based on a second touch input is detected. When a second scroll input based on a second touch input is detected (e.g., YES in operation 705), in operation 710, the processor 240 may identify whether a designated time has elapsed.

A designated time according to an embodiment may be a time for transitioning to a state of not being displayed from the display 230 without an additional gesture input (or touch input) after a scroll bar is displayed on the display 230. For example, the designated time may be approximately 3 seconds. However, the present disclosure is not limited thereto.

In an embodiment, in a state where the second scroll input based on the second touch input is detected, when it is identified that the designated time has not elapsed (e.g., NO in operation 710), in operation 715, the processor 240 may identify whether the second touch input is detected in the first area of a display (e.g., the display 230 of FIG. 2). When it is identified that the second touch input is detected in the first area of the display 230 (e.g., YES in operation 715), in operation 720, the processor 240 may maintain a state in which the scroll bar is displayed in the partial area of the first side surface (e.g., the first side surface 230a of FIG. 5) of the display 230.

In an embodiment, when it is identified that the second touch input is not detected in the first area of the display 230 (e.g., NO in operation 715), in operation 725, the processor 240 may identify whether the second touch input is detected in the second area of the display 230. When it is identified that the second touch input is detected in the second area of the display 230 (e.g., YES in operation 725), in operation 720, the processor 240 may maintain a state in which the scroll bar is displayed in the partial area of the first side surface 230a of the display 230.

In an embodiment, when it is identified that the second touch input is not detected in the second area of the display 230 (e.g., NO in operation 725), in operation 730, the processor 240 may identify whether the second touch input is detected in the third area of the display 230. When it is identified that the second touch input is detected in the third area of the display 230 (e.g., YES in operation 730), in operation 720, the processor 240 may maintain a state in which the scroll bar is displayed in the partial area of the first side surface 230a of the display 230.

In an embodiment, when it is identified that the second touch input is not detected in the third area of the display 230 (e.g., NO in operation 730), the processor 240 may branch to operation 420 of FIG. 4, and may continue to display the scroll bar in the partial area of the first side surface 230a of the display 230 corresponding to the first area.

In an embodiment, when a second scroll input based on a second touch input is not detected (e.g., NO in operation 705), in operation 740, the processor 240 may identify whether the designated time has elapsed.

In an embodiment, when it is identified that the designated time has elapsed (e.g., YES in operation 740), in operation 735, the processor 240 may remove display of the scroll bar from the display 230 (e.g., remove from the partial area of the first side surface of the display 230). When it is identified that the designated time has not elapsed (e.g., NO in operation 740), the processor 240 may branch to operation 420 of FIG. 4, and may continue to display the scroll bar in the partial area of the first side surface of the display 230 corresponding to the first area.

In an embodiment, when it is identified that the designated time has elapsed (e.g., YES in operation 710), in operation 745, the processor 240 may identify whether the second touch input is detected in the first area of the display 230. When it is identified that the second touch input is detected in the first area of the display 230 (e.g., YES in operation 745), in operation 750, the processor 240 may maintain an area to display the scroll bar as the partial area of the first side surface of the display 230. For example, when the designated time has elapsed, the processor 240 may not display the scroll bar in the partial area of the first side surface of the display 230. In an embodiment, location information of the scroll bar that had been displayed before a second scroll input based on a second touch input was detected (e.g., information related to the partial area of the first side surface of the display 230) may be pre-stored in a memory (e.g., the memory 220 of FIG. 2). Based on this, in a state where the scroll bar is not displayed as the designated time has elapsed, when the second touch input is detected in the first area of the display 230, the processor 240 may maintain an area to display the scroll bar as the partial area of the first side surface of the display 230.

In an embodiment, when it is identified that the second touch input is not detected in the first area of the display 230 (e.g., NO in operation 745), in operation 755, the processor 240 may identify whether the second touch input is detected in the second area of the display 230. When it is identified that the second touch input is detected in the second area of the display 230 (e.g., YES in operation 755), in operation 765, the processor 240 may change an area to display the scroll bar to a partial area of the second side surface of the display 230. For example, when the designated time has elapsed, the processor 240 may not display the scroll bar in the partial area of the first side surface of the display 230. In an embodiment, location information of the scroll bar that had been displayed before a second scroll input based on a second touch input was detected (e.g., information related to the partial area of the first side surface of the display 230) may be pre-stored in the memory 220. Based on this, in a state where the scroll bar is not displayed as the designated time has elapsed, when the second touch input is detected in the second area of the display 230, the processor 240 may change an area to display the scroll bar to the partial area of the second side surface of the display 230. In an embodiment, the processor 240 may, when an area to display the scroll bar is changed to the partial area of the second side surface 230b of the display 230, store information related to a location of the changed area where the scroll bar is displayed (e.g., information related to the partial area of the second side surface of the display 230) in a memory (e.g., the memory 220 of FIG. 2).

In an embodiment, when it is identified that the second touch input is not detected in the second area of the display 230 (e.g., NO in operation 755), in operation 760, the processor 240 may identify whether the second touch input is detected in the third area of the display 230. When it is identified that the second touch input is detected in the third area of the display 230 (e.g., YES in operation 760), in operation 770, the processor 240 may maintain an area to display the scroll bar as the partial area of the first side surface of the display 230 based on location information of the scroll bar that had been displayed before a second scroll input based on a second touch input was detected. For example, when the designated time has elapsed, the processor 240 may not display the scroll bar in the partial area of the first side surface of the display 230. In an embodiment, location information of the scroll bar that had been displayed before a second scroll input based on a second touch input was detected (e.g., information related to the partial area of the first side surface of the display 230) may be pre-stored in the memory 220. Based on this, in a state where the scroll bar is not displayed as the designated time has elapsed, when the second touch input is detected in the third area of the display 230, the processor 240 may, based on information related to the partial area of the first side surface of the display 230 which is location information of a scroll bar that had been displayed before a second scroll input based on a second touch input was detected, maintain an area to display the scroll bar as the partial area of the first side surface of the display 230.

In an embodiment, when it is identified that the second touch input is not detected in the third area of the display 230 (e.g., NO in operation 760), the processor 240 may branch to operation 710 and may repeatedly perform an operation of identifying whether the designated time has elapsed.

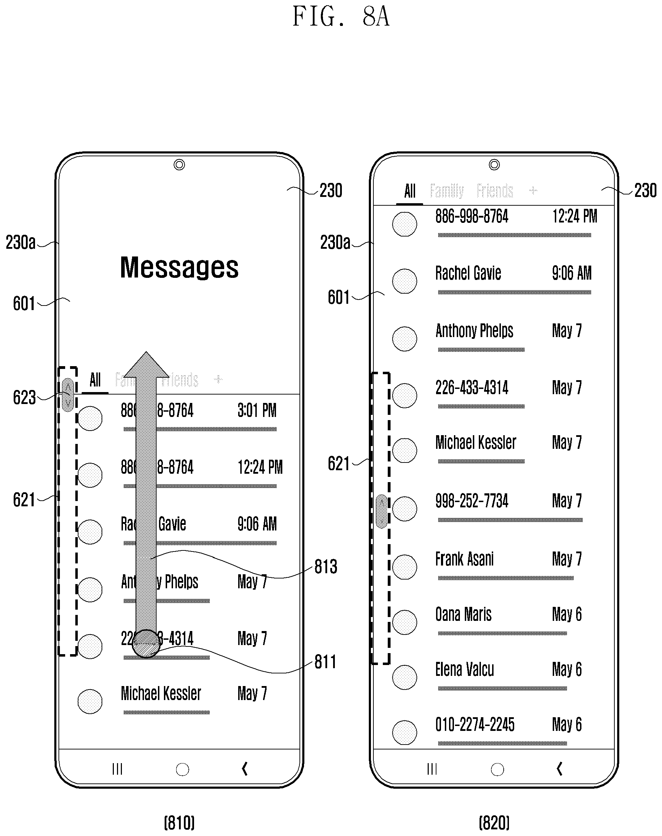

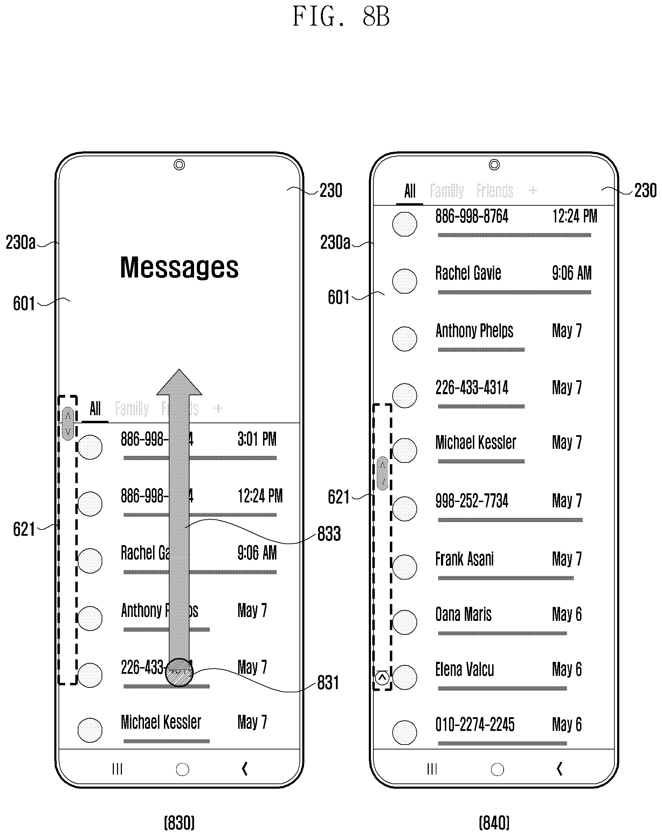

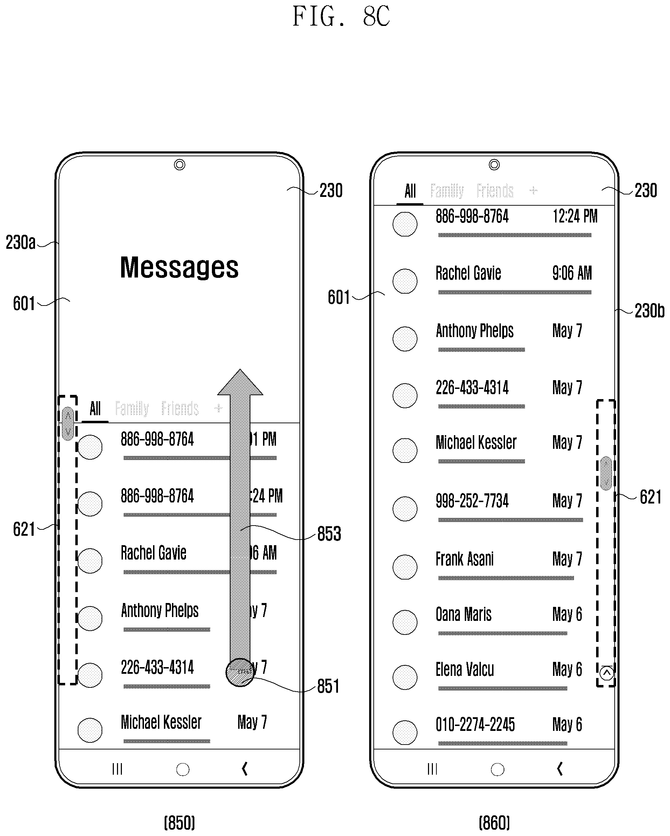

FIGS. 8A, 8B, and 8C are views for explaining a method for displaying a scroll bar, according to an embodiment of the present disclosure.

With reference to reference numeral <810> of FIG. 8A, a processor (e.g., the processor 240 of FIG. 2) of an electronic device (e.g., the electronic device 101 of FIG. 1) may display a portion of a screen 601 on a display (e.g., the display 230 of FIG. 2). For example, the screen 601 may be a screen related to a message application. As examined in FIG. 6A described above, a state may be that a scroll bar 621 including an indicator 623 is displayed on the first side surface 230a of the display 230 as a scroll input 617 based on a touch input 615 is detected in the first area 510 from among the plurality of areas (e.g., the first area 510, the second area 520, and the third area 530 of FIG. 5) of the display 230.

In an embodiment, the processor 240 may detect a second touch input 811 based on a second scroll input 813. When a second touch input 811 based on a second scroll input 813 is detected, the processor 240 may identify whether a designated time has elapsed. For example, the designated time may be a time for transitioning to a state of not being displayed from the display 230 without an additional gesture input (or touch input) after a scroll bar is displayed on the display 230.

In an embodiment, when it is identified that the designated time has not elapsed, the processor 240 may identify an area where the second touch input 811 is detected from among the plurality of areas of the display 230. As illustrated in reference numeral <810>, when it is identified that the second touch input 811 is detected in the first area 510 of the display 230, as illustrated in reference numeral <820> of FIG. 8A, the processor 240 may maintain a state in which the scroll bar 621 is displayed in the partial area of the first side surface 230a of the display 230.

In an embodiment, when it is identified that the designated time has elapsed at a time point when the second touch input 811 based on the second scroll input 813 is detected, the processor 240 may identify an area where the second touch input 811 is detected from among the plurality of areas of the display 230. When it is identified that the second touch input 811 is detected in the first area 510 of the display 230, the processor 240 may maintain an area to display the scroll bar 621 as the partial area of the first side surface 230a of the display 230. For example, when the designated time has elapsed, the processor 240 may not display the scroll bar 621 in the partial area of the first side surface 230a of the display 230. In an embodiment, location information of a scroll bar that had been displayed before a second scroll input 813 based on a second touch input 811 was detected (e.g., information related to the partial area of the first side surface 230a of the display 230) may be pre-stored in a memory (e.g., the memory 220 of FIG. 2). Based on this, in a state where a scroll bar is not displayed as the designated time has elapsed, when the second touch input 811 is detected in the first area 510 of the display 230, the processor 240 may maintain an area to display a scroll bar as the partial area of the first side surface 230a of the display 230. When it is identified that the designated time has elapsed, the processor 240 may remove display of the scroll bar 621 from the display 230.

With reference to reference numeral <830> of FIG. 8B according to an embodiment, in a state where the scroll bar 621 is displayed on the first side surface 230a of the display 230, a second touch input 831 based on a second scroll input 833 may be detected. When a second touch input 831 based on a second scroll input 833 is detected, the processor 240 may identify whether a designated time has elapsed. When it is identified that the designated time has not elapsed, the processor 240 may identify an area where the second touch input 831 is detected from among the plurality of areas of the display 230. As illustrated in reference numeral <830>, when it is identified that the second touch input 831 is detected in the third area 530 of the display 230, as illustrated in reference numeral <840> of FIG. 8B, the processor 240 may maintain a state in which the scroll bar 621 is displayed in the partial area of the first side surface 230a of the display 230.

In an embodiment, when it is identified that the designated time has elapsed at a time point when the second touch input 831 based on the second scroll input 833 is detected, the processor 240 may identify an area where the second touch input 831 is detected from among the plurality of areas of the display 230. When it is identified that the second touch input 831 is detected in the third area 530 of the display 230, the processor 240 may, based on location information of a scroll bar that had been displayed before a second scroll input 833 based on a second touch input 831 was detected, maintain an area to display a scroll bar as the partial area of the first side surface 230a of the display 230. For example, when the designated time has elapsed, the processor 240 may not display the scroll bar 621 in the partial area of the first side surface 230a of the display 230. In an embodiment, location information of a scroll bar that had been displayed before a second scroll input 833 based on a second touch input 831 was detected (e.g., information related to the partial area of the first side surface 230a of the display 230) may be pre-stored in the memory 220. Based on this, in a state where a scroll bar is not displayed as the designated time has elapsed, when the second touch input 831 is detected in the third area 530 of the display 230, the processor 240 may, based on information related to the partial area of the first side surface 230a of the display 230 which is location information of a scroll bar that had been displayed before a second scroll input 833 based on a second touch input 831 was detected, maintain an area to display a scroll bar as the partial area of the first side surface 230a of the display 230. When it is identified that the designated time has elapsed, the processor 240 may remove display of the scroll bar 621 from the display 230.

With reference to reference numeral <850> of FIG. 8C according to an embodiment, in a state where the scroll bar 621 is displayed on the first side surface 230a of the display 230, a second touch input 851 based on a second scroll input 853 may be detected. When a second touch input 851 based on a second scroll input 853 is detected, the processor 240 may identify whether a designated time has elapsed. When it is identified that the designated time has not elapsed, the processor 240 may identify an area where the second touch input 851 is detected from among the plurality of areas of the display 230. As illustrated in reference numeral <850> of FIG. 8C, when it is identified that the second touch input 851 is detected in the second area 520 of the display 230, the processor 240 may maintain a state in which the scroll bar 621 is displayed in the partial area of the first side surface 230a of the display 230.

In an embodiment, when it is identified that the designated time has elapsed at a time point when the second touch input 851 based on the second scroll input 853 is detected, the processor 240 may identify an area where the second touch input 851 is detected from among the plurality of areas of the display 230. When it is identified that the second touch input 851 is detected in the second area 520 of the display 230, the processor 240 may, as illustrated in reference numeral <860> of FIG. 8C, change an area to display the scroll bar 621 to the second side surface 230b of the display 230. For example, when the designated time has elapsed, the processor 240 may not display the scroll bar 621 in the partial area of the first side surface 230a of the display 230. In an embodiment, location information of a scroll bar that had been displayed before a second scroll input 853 based on a second touch input 851 was detected (e.g., information related to the partial area of the first side surface of the display 230) may be pre-stored in the memory 220. Based on this, in a state where a scroll bar is not displayed as the designated time has elapsed, when the second touch input 851 is detected in the second area 520 of the display 230, the processor 240 may change an area to display a scroll bar to the partial area of the second side surface 230b of the display 230. In an embodiment, the processor 240 may store information related to a location of the changed area where the scroll bar is displayed (e.g., information related to the partial area of the second side surface 230b of the display 230) in the memory 220. When it is identified that the designated time has elapsed, the processor 240 may remove display of the scroll bar 621 from the display 230.

FIGS. 9A and 9B are flowcharts for explaining a method for displaying a scroll bar, according to an embodiment of the present disclosure.

In the following embodiments, each operation of FIG. 9A and FIG. 9B may be performed sequentially, but is not necessarily performed sequentially. For example, an order of each operation of FIG. 9A and FIG. 9B may be changed, and at least two operations may be performed in parallel.

According to an embodiment, it may be understood that operations 905 to 970 of FIG. 9A and FIG. 9B are performed in the processor (e.g., the processor 240 of FIG. 2) of the electronic device (e.g., the electronic device 101 of FIG. 1).

FIG. 9A and FIG. 9B according to various embodiments may be an additional operation of operation 430 of FIG. 4 described above. The present disclosure is not limited thereto, and FIG. 9A and FIG. 9B according to various embodiments may also be an additional operation of operation 440 of FIG. 4 described above.

With reference to FIG. 9A and FIG. 9B, in operation 905, the processor 240 may identify whether a second scroll input based on a second touch input is detected. When a second scroll input based on a second touch input is detected (e.g., YES in operation 905), in operation 910, the processor 240 may identify whether a designated time has elapsed.

A designated time according to an embodiment may be a time for transitioning to a state of not being displayed from the display 230 without an additional gesture input (or touch input) after a scroll bar is displayed on the display 230. For example, the designated time may be approximately 3 seconds. However, the present disclosure is not limited thereto.

In an embodiment, in a state where the second scroll input based on the second touch input is detected, when it is identified that the designated time has not elapsed (e.g., NO in operation 910), in operation 915, the processor 240 may identify whether the second touch input is detected in the first area of a display (e.g., the display 230 of FIG. 2). When it is identified that the second touch input is detected in the first area of the display 230 (e.g., YES in operation 915), in operation 920, the processor 240 may maintain a state in which the scroll bar is displayed in the partial area of the second side surface (e.g., the second side surface 230b of FIG. 5) of the display 230.

In an embodiment, when it is identified that the second touch input is not detected in the first area of the display 230 (e.g., NO in operation 915), in operation 925, the processor 240 may identify whether the second touch input is detected in the second area of the display 230. When it is identified that the second touch input is detected in the second area of the display 230 (YES in operation 925), in operation 920, the processor 240 may maintain a state in which the scroll bar is displayed in the partial area of the second side surface 230b of the display 230.

In an embodiment, when it is identified that the second touch input is not detected in the second area of the display 230 (e.g., NO in operation 925), in operation 930, the processor 240 may identify whether the second touch input is detected in the third area of the display 230. When it is identified that the second touch input is detected in the third area of the display 230 (e.g., YES in operation 930), in operation 920, the processor 240 may maintain a state in which the scroll bar is displayed in the partial area of the second side surface 230b of the display 230.

In an embodiment, when it is identified that the second touch input is not detected in the third area of the display 230 (e.g., NO in operation 930), the processor 240 may branch to operation 430 of FIG. 4, and may continue to display the scroll bar in the partial area of the second side surface 230b of the display 230 corresponding to the second area.

In an embodiment, when a second scroll input based on a second touch input is not detected (e.g., NO in operation 905), in operation 940, the processor 240 may identify whether the designated time has elapsed.

In an embodiment, when it is identified that the designated time has elapsed (e.g., YES in operation 940), in operation 935, the processor 240 may remove display of the scroll bar from the display 230 (e.g., remove from the partial area of the second side surface of the display 230). In an embodiment, when it is identified that the designated time has not elapsed (e.g., NO in operation 940), the processor 240 may branch to operation 430 of FIG. 4, and may continue to display the scroll bar in the partial area of the second side surface 230b of the display 230 corresponding to the second area.

In an embodiment, it may be identified whether the designated time has elapsed. When it is identified that the designated time has elapsed (e.g., YES in operation 910), in operation 945, the processor 240 may identify whether the second touch input is detected in the first area of the display 230. When it is identified that the second touch input is detected in the first area of the display 230 (e.g., YES in operation 945), in operation 950, the processor 240 may change an area to display the scroll bar to the partial area of the first side surface of the display 230. For example, when the designated time has elapsed, the processor 240 may not display the scroll bar in the partial area of the second side surface of the display 230. In an embodiment, location information of the scroll bar that had been displayed before a second scroll input based on a second touch input was detected (e.g., information related to the partial area of the second side surface of the display 230) may be pre-stored in a memory (e.g., the memory 220 of FIG. 2). Based on this, in a state where the scroll bar is not displayed as the designated time has elapsed, when the second touch input is detected in the first area of the display 230, the processor 240 may change an area to display the scroll bar to the partial area of the first side surface of the display 230. In an embodiment, the processor 240 may store information related to a location of the changed area where the scroll bar is displayed (e.g., information related to the partial area of the first side surface of the display 230) in the memory 220.

In an embodiment, when it is identified that the second touch input is not detected in the first area of the display 230 (e.g., NO in operation 945), in operation 955, the processor 240 may identify whether the second touch input is detected in the second area of the display 230. When it is identified that the second touch input is detected in the second area of the display 230 (e.g., YES in operation 955), in operation 960, the processor 240 may maintain an area to display the scroll bar as the partial area of the second side surface of the display 230. For example, when the designated time has elapsed, the processor 240 may not display the scroll bar in the partial area of the second side surface of the display 230. In an embodiment, location information of the scroll bar that had been displayed before a second scroll input based on a second touch input was detected (e.g., information related to the partial area of the second side surface of the display 230) may be pre-stored in the memory 220. Based on this, in a state where the scroll bar is not displayed as the designated time has elapsed, when the second touch input is detected in the second area of the display 230, the processor 240 may maintain an area to display the scroll bar as the partial area of the second side surface of the display 230.

In an embodiment, when it is identified that the second touch input is not detected in the second area of the display 230 (e.g., NO in operation 955), in operation 965, the processor 240 may identify whether the second touch input is detected in the third area of the display 230. When it is identified that the second touch input is detected in the third area of the display 230 (e.g., YES in operation 965), in operation 970, the processor 240 may, based on location information of the scroll bar that had been displayed before a second scroll input based on a second touch input was detected, maintain an area to display the scroll bar as the partial area of the second side surface of the display 230. For example, when the designated time has elapsed, the processor 240 may not display the scroll bar in the partial area of the second side surface of the display 230. In an embodiment, location information of the scroll bar that had been displayed before a second scroll input based on a second touch input was detected (e.g., information related to the partial area of the second side surface of the display 230) may be pre-stored in the memory 220. Based on this, in a state where the scroll bar is not displayed as the designated time has elapsed, when the second touch input is detected in the third area of the display 230, the processor 240 may, based on information related to the partial area of the second side surface of the display 230 which is location information of a scroll bar that had been displayed before a second scroll input based on a second touch input was detected, maintain an area to display the scroll bar as the partial area of the second side surface of the display 230.

In an embodiment, when it is identified that the second touch input is not detected in the third area of the display 230 (e.g., NO in operation 965), in operation 970, the processor 240 may remove display of the scroll bar from the display 230.

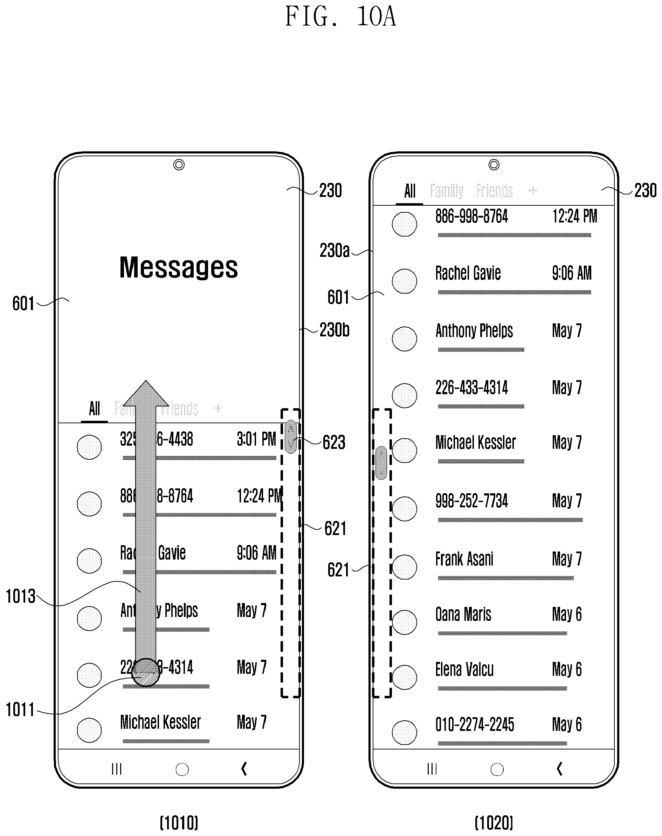

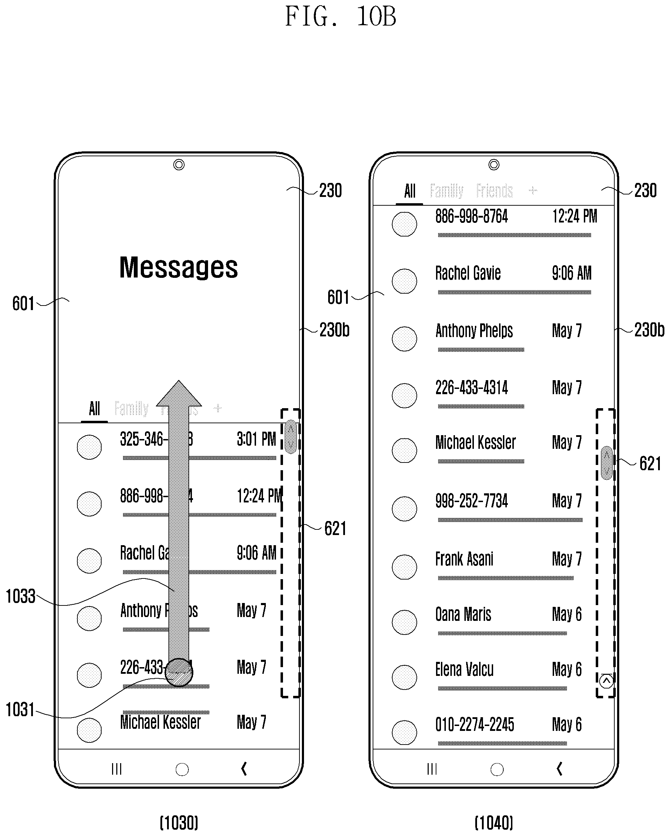

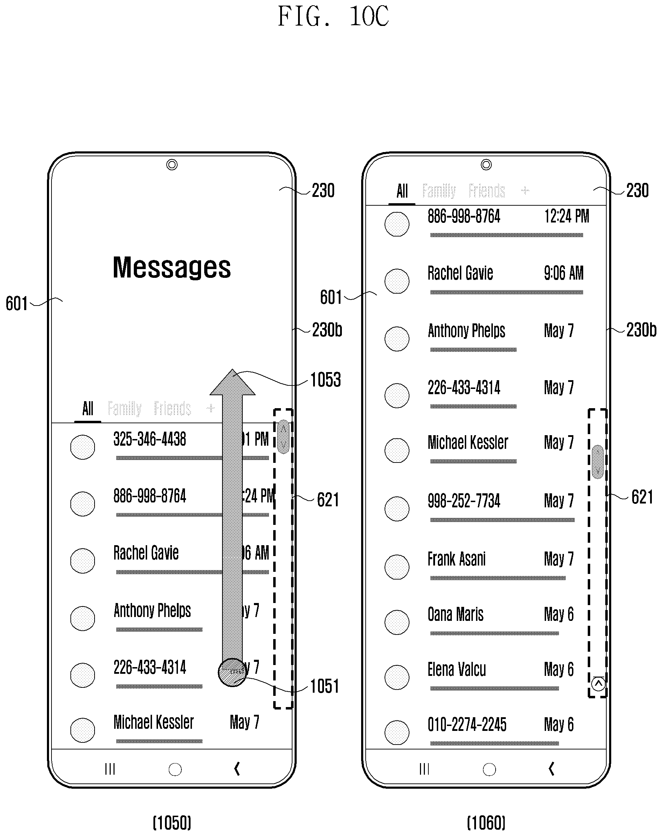

FIGS. 10A, 10B, and 10C are views for explaining a method for displaying a scroll bar, according to an embodiment of the present disclosure.

With reference to reference numeral <1010> of FIG. 10A, a processor (e.g., the processor 240 of FIG. 2) of an electronic device (e.g., the electronic device 101 of FIG. 1) may display a portion of a screen 601 on a display (e.g., the display 230 of FIG. 2). For example, the screen 601 may be a screen related to a message application. As examined in FIG. 6B described above, a state may be that a scroll bar 621 is displayed on the second side surface 230b of the display 230 as a scroll input 633 based on a touch input 631 is detected in the second area 520 from among the plurality of areas (e.g., the first area 510, the second area 520, and the third area 530 of FIG. 5) of the display 230.

In an embodiment, the processor 240 may detect a second touch input 1011 based on a second scroll input 1013. When a second touch input 1011 based on a second scroll input 1013 is detected, the processor 240 may identify whether a designated time has elapsed. For example, the designated time may be a time for transitioning to a state of not being displayed from the display 230 without an additional gesture input (or touch input) after a scroll bar is displayed on the display 230.

In an embodiment, when it is identified that the designated time has not elapsed, the processor 240 may identify an area where the second touch input 1011 is detected from among the plurality of areas of the display 230. As illustrated in reference numeral <1010>, when it is identified that the second touch input 1011 is detected in the first area 510 of the display 230, the processor 240 may maintain a state in which the scroll bar 621 is displayed in the partial area of the second side surface 230b of the display 230.

In an embodiment, when it is identified that the designated time has elapsed at a time point when the second touch input 1011 based on the second scroll input 1013 is detected, the processor 240 may identify an area where the second touch input 1011 is detected from among the plurality of areas of the display 230. When it is identified that the second touch input 1011 is detected in the first area 510 of the display 230, the processor 240 may, as illustrated in reference numeral <1020> of FIG. 10A, change an area to display the scroll bar 621 from the partial area of the second side surface 230b of the display 230 to the partial area of the first side surface 230a of the display 230. For example, when the designated time has elapsed, the processor 240 may not display the scroll bar 621 in the partial area of the second side surface 230b of the display 230. In an embodiment, location information of the scroll bar that had been displayed before the second scroll input 1013 based on the second touch input 1011 was detected (e.g., information related to the partial area of the second side surface 230b of the display 230) may be pre-stored in a memory (e.g., the memory 220 of FIG. 2). Based on this, in a state where the scroll bar is not displayed as the designated time has elapsed, when the second touch input 1011 is detected in the first area 510 of the display 230, the processor 240 may change an area to display the scroll bar to the partial area of the first side surface 230a of the display 230. In an embodiment, the processor 240 may store information related to a location of the changed area where the scroll bar is displayed (e.g., information related to the partial area of the first side surface of the display 230) in the memory 220. When it is identified that the designated time has elapsed, the processor 240 may remove display of the scroll bar 621 from the display 230.

With reference to reference numeral <1030> of FIG. 10B according to an embodiment, in a state where the scroll bar 621 is displayed on the second side surface 230b of the display 230, a second touch input 1031 based on a second scroll input 1033 may be detected. When a second touch input 1031 based on a second scroll input 1033 is detected, the processor 240 may identify whether a designated time has elapsed. When it is identified that the designated time has not elapsed, the processor 240 may identify an area where the second touch input 1031 is detected from among the plurality of areas of the display 230. As illustrated in reference numeral <1030> of FIG. 10B, when it is identified that the second touch input 1031 is detected in the third area 530 of the display 230, as illustrated in reference numeral <1040> of FIG. 10B, the processor 240 may maintain a state in which the scroll bar 621 is displayed in the partial area of the second side surface 230b of the display 230.

In an embodiment, when it is identified that the designated time has elapsed at a time point when the second touch input 1031 based on the second scroll input 1033 is detected, the processor 240 may identify an area where the second touch input 1031 is detected from among the plurality of areas of the display 230. When it is identified that the second touch input 1031 is detected in the third area 530 of the display 230, the processor 240 may, based on location information of a scroll bar that had been displayed before a second scroll input 1033 based on a second touch input 1031 was detected, maintain an area to display a scroll bar as the partial area of the second side surface 230b of the display 230. For example, when the designated time has elapsed, the processor 240 may not display the scroll bar 621 in the partial area of the second side surface 230b of the display 230. In an embodiment, location information of a scroll bar that had been displayed before a second scroll input 1033 based on a second touch input 1031 was detected (e.g., information related to the partial area of the second side surface 230b of the display 230) may be pre-stored in the memory 220. Based on this, in a state where the scroll bar is not displayed as the designated time has elapsed, when the second touch input 1031 is detected in the third area 530 of the display 230, the processor 240 may, based on information related to the partial area of the second side surface 230b of the display 230 which is location information of a scroll bar that had been displayed before a second scroll input 1033 based on a second touch input 1031 was detected, maintain an area to display a scroll bar as the partial area of the second side surface 230b of the display 230. When it is identified that the designated time has elapsed, the processor 240 may remove display of the scroll bar 621 from the display 230.

With reference to reference numeral <1050> of FIG. 10C according to an embodiment, in a state where the scroll bar 621 is displayed on the second side surface 230b of the display 230, a second touch input 1051 based on a second scroll input 1053 may be detected. When a second touch input 1051 based on a second scroll input 1053 is detected, the processor 240 may identify whether a designated time has elapsed. When it is identified that the designated time has not elapsed, the processor 240 may identify an area where the second touch input 1051 is detected from among the plurality of areas of the display 230. As illustrated in reference numeral <1050> of FIG. 10C, when it is identified that the second touch input 1051 is detected in the second area 520 of the display 230, the processor 240 may, as illustrated in reference numeral <1060> of FIG. 10C, maintain a state in which the scroll bar 621 is displayed in the partial area of the second side surface 230b of the display 230.

In an embodiment, when it is identified that the designated time has elapsed at a time point when the second touch input 1051 based on the second scroll input 1053 is detected, the processor 240 may identify an area where the second touch input 1051 is detected from among the plurality of areas of the display 230. When it is identified that the second touch input 1051 is detected in the second area 520 of the display 230, the processor 240 may maintain an area to display the scroll bar 621 as the partial area of the second side surface 230b of the display 230. For example, when the designated time has elapsed, the processor 240 may not display the scroll bar 621 in the partial area of the second side surface 230b of the display 230. In an embodiment, location information of the scroll bar that had been displayed before the second scroll input 1053 based on the second touch input 1051 was detected (e.g., information related to the partial area of the second side surface of the display 230) may be pre-stored in the memory 220. Based on this, in a state where the scroll bar is not displayed as the designated time has elapsed, when the second touch input 1051 is detected in the second area 520 of the display 230, the processor 240 may maintain an area to display the scroll bar as the partial area of the second side surface 230b of the display 230. When it is identified that the designated time has elapsed, the processor 240 may remove display of the scroll bar 621 from the display 230.

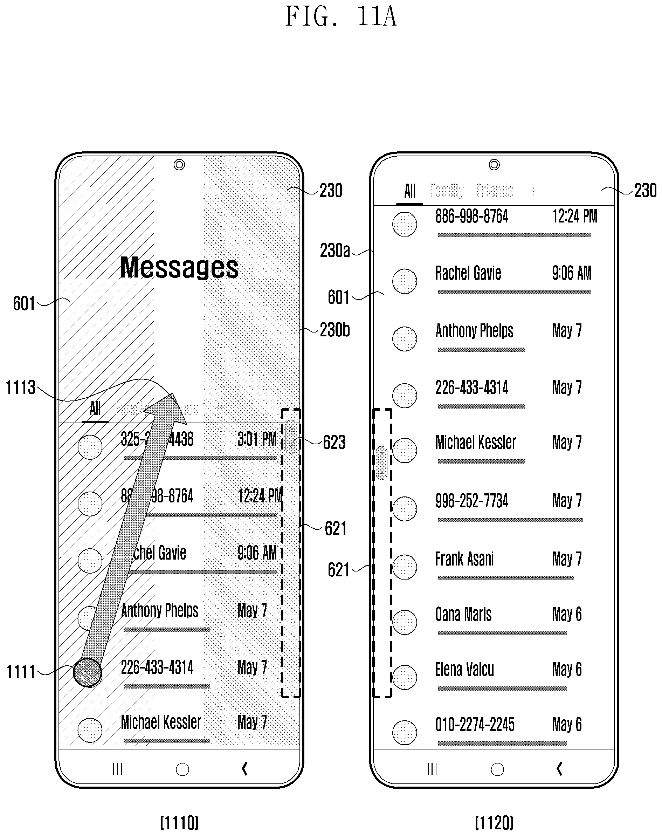

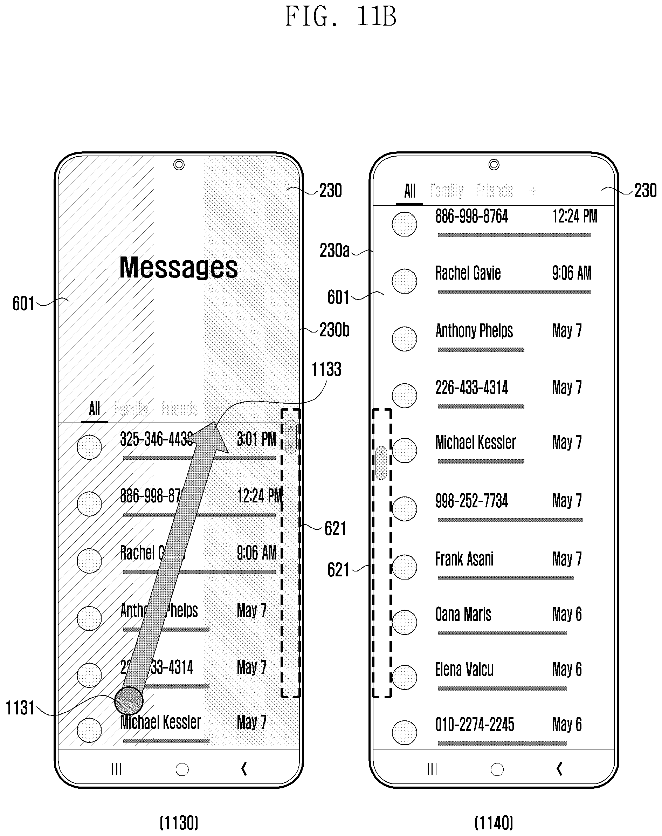

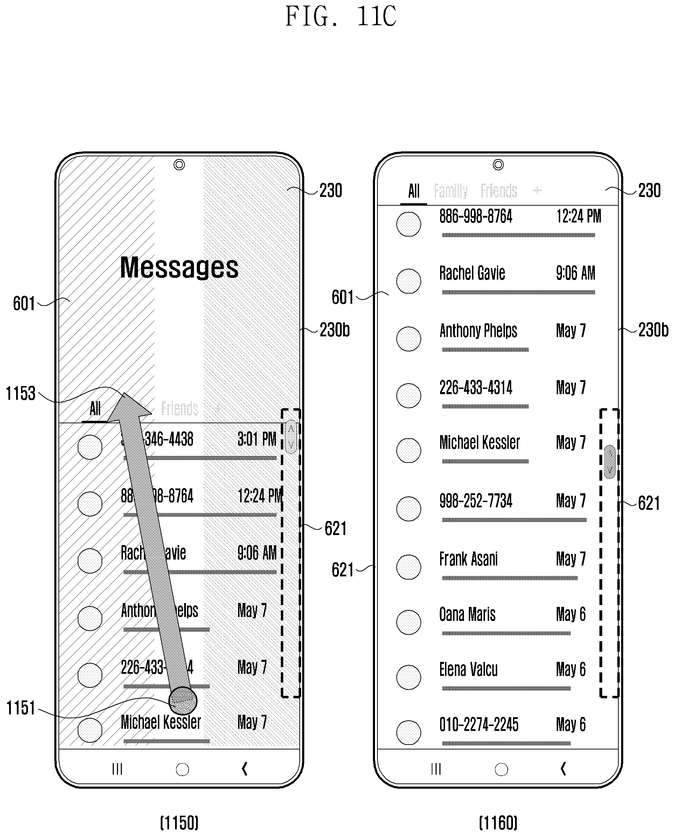

FIGS. 11A, 11B, and 11C are views for explaining a method for displaying a scroll bar, according to an embodiment of the present disclosure.

With reference to reference numeral <1110> of FIG. 11A, a processor (e.g., the processor 240 of FIG. 2) of an electronic device (e.g., the electronic device 101 of FIG. 1) may display a portion of a screen 601 on a display (e.g., the display 230 of FIG. 2). For example, the screen 601 may be a screen related to a message application. However, the present disclosure is not limited thereto.

In an embodiment, as examined in FIG. 6B described above, a state may be that a scroll bar 621 is displayed on the second side surface 230b of the display 230 as a scroll input 633 based on a touch input 631 is detected in the second area 520 from among the plurality of areas (e.g., the first area 510, the second area 520, and the third area 530 of FIG. 5) of the display 230.

In an embodiment, the processor 240 may detect a second touch input 1111 based on a second scroll input 1113. For example, the second touch input 1111 may be detected in the first area 510 of the display 230, the second scroll input 1113 based on the second touch input 1111 may be detected from the first area 510 to the third area 530, and the second scroll input 1113 may be released in the third area 530.

In an embodiment, when the second scroll input 1113 based on the second touch input 1111 is detected, the processor 240 may display the scroll bar 621 including an indicator 623 based on an area where the second touch input 1111 is detected, regardless of an area where the second scroll input 1113 is detected and an area where the second scroll input 1113 is released. For example, in a state exceeding the designated time, when the second touch input 1111 is detected in the first area 510 of the display 230, the processor 240 may, as illustrated in reference numeral <1120> of FIG. 11A, change an area to display the scroll bar 621 to the first side surface 230a of the display 230.

With reference to reference numeral <1130> of FIG. 11B according to an embodiment, the processor 240 may detect a second scroll input 1133 based on a second touch input 1131. For example, the second touch input 1131 may be detected in the first area 510 of the display 230, the second scroll input 1133 based on the second touch input 1131 may be detected from the first area 510 to the second area 520, and the second scroll input 1133 may be released in the second area 520.

In an embodiment, when the second scroll input 1133 based on the second touch input 1131 is detected, the processor 240 may display the scroll bar 621 based on an area where the second touch input 1131 is detected, regardless of an area where the second scroll input 1133 is detected and an area where the second scroll input 1133 is released. For example, in a state exceeding the designated time, when the second touch input 1131 is detected in the first area 510 of the display 230, the processor 240 may, as illustrated in reference numeral <1140> of FIG. 11B, change an area to display the scroll bar 621 to the first side surface 230a of the display 230.

With reference to reference numeral <1150> of FIG. 11C according to an embodiment, the processor 240 may detect a second scroll input 1153 based on a second touch input 1151. For example, the second touch input 1151 may be detected in the third area 530 of the display 230, the second scroll input 1153 based on the second touch input 1151 may be detected from the third area 530 to the first area 510, and the second scroll input 1153 may be released in the first area 510.

In an embodiment, when the second scroll input 1153 based on the second touch input 1151 is detected, the processor 240 may display the scroll bar 621 based on an area where the second touch input 1151 is detected, regardless of an area where the second scroll input 1153 is detected and an area where the second scroll input 1153 is released. For example, in a state exceeding the designated time, when the second touch input 1151 is detected in the third area 530 of the display 230, the processor 240 may, as illustrated in reference numeral <1160> of FIG. 11C, maintain an area to display the scroll bar 621 as a partial area of the second side surface 230b of the display 230. For example, an area to display the scroll bar may be maintained as a partial area of the second side surface 230b of the display 230 based on location information (e.g., information related to a partial area of the second side surface 230b of the display 230) of a scroll bar that had been displayed before the second scroll input 1153 based on the second touch input 1151 was detected.

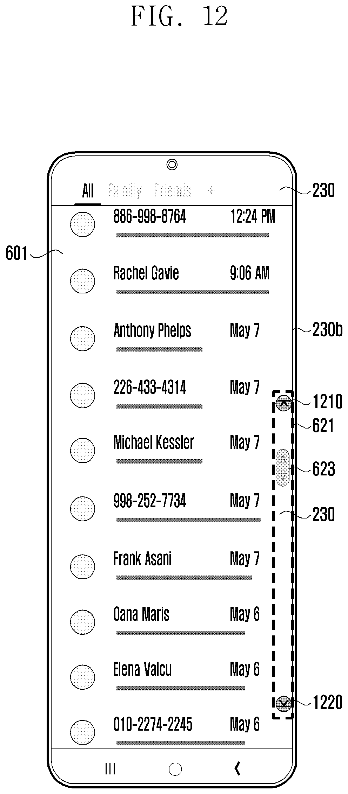

FIG. 12 is a view for explaining a scroll bar including at least one object, according to an embodiment of the present disclosure.

In an embodiment, a processor (e.g., the processor 240 of FIG. 2) of an electronic device (e.g., the electronic device 101 of FIG. 1) may display a portion of a screen 601 on a display (e.g., the display 230 of FIG. 2). For example, the screen 601 may be a screen related to a message application. However, the present disclosure is not limited thereto.

In an embodiment, a size (e.g., length) of a screen may be larger than a size (e.g., length) of the display 230, and accordingly, a state may be that a portion of an entire area of the screen is displayed on the display 230.

In an embodiment, as examined in FIGS. 3 to 11C, the processor 240 may display a scroll bar 621 in a partial area of a side surface (e.g., the first side surface 230a or the second side surface 230b of FIG. 5) of the display 230 corresponding to an area where a touch input is detected from among the plurality of areas (e.g., the first area 510, the second area 520, and the third area 530 of FIG. 5) of the display 230.

With reference to FIG. 12, the scroll bar 621 may include at least one indicator. The at least one indicator may include a first indicator 623, a second indicator 1210, and/or a third indicator 1220. For example, the first indicator 623 is movable by a user, and the screen 601 may be moved and displayed in response to movement of the first indicator 623. The second indicator 1210 may be selectable by a user, and an uppermost area of the screen 601 may be displayed on the display 230 in response to an input for selecting the second indicator 1210. The third indicator 1220 may be selectable by a user, and a lowermost area of the screen 601 may be displayed on the display 230 in response to an input for selecting the third indicator 1220.

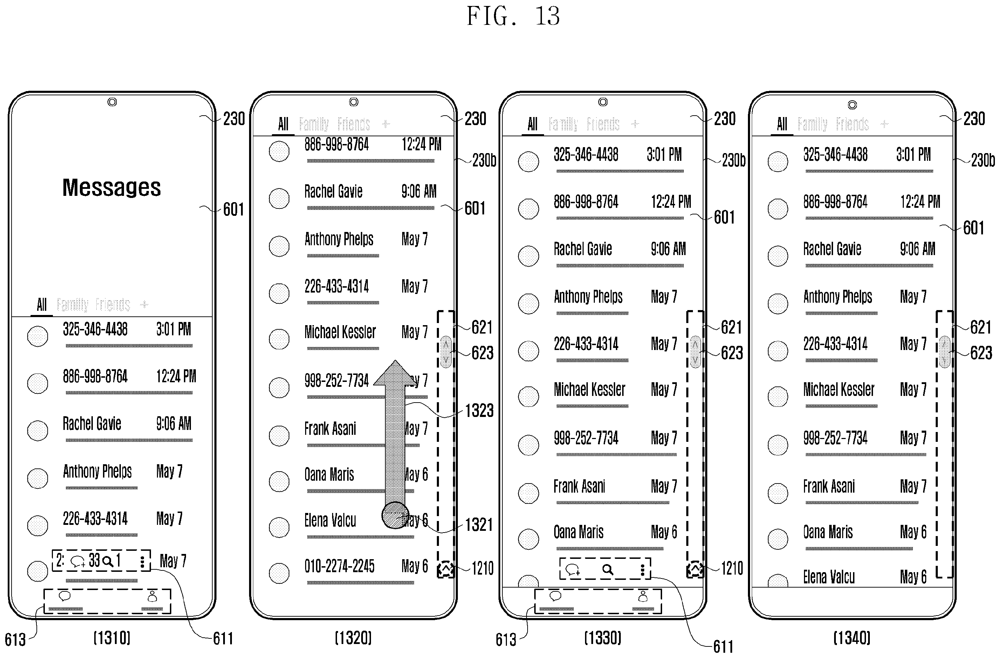

FIG. 13 is a view for explaining a method for displaying a scroll bar, according to an embodiment of the present disclosure.

With reference to reference numeral <1310> of FIG. 13, a processor (e.g., the processor 240 of FIG. 2) of an electronic device (e.g., the electronic device 101 of FIG. 1) may display a portion of a screen 601 on a display (e.g., the display 230 of FIG. 2). For example, the screen 601 may be a screen related to a message application. However, the present disclosure is not limited thereto.

In an embodiment, the processor 240 may further display on the display 230, together with the screen 601, at least one object related to the screen 601 (e.g., at least one first object 611 (e.g., an object for creating a new message, an object for searching for a message, and/or an object related to message settings) and/or at least one second object 613 (e.g., an object for displaying a chat window list screen, an object for displaying a contact screen)).

In an embodiment, as examined in FIG. 6A, the processor 240 may detect a scroll input 617 based on a touch input 615. For example, a size of the screen 601 may be larger than a size of the display 230. In this case, when a scroll input 617 based on a touch input 615 is detected, the processor 240 may display another portion of the screen 601 on the display 230 by moving the screen 601 in a direction in which the scroll input 617 is detected.

In an embodiment, as illustrated in reference numeral <1320> of FIG. 13, the processor 240 may detect a scroll input 1323 based on a touch input 1321 in the second area 520 from among the plurality of areas (e.g., the first area 510, the second area 520, and the third area 530 of FIG. 5) of the display 230. When a scroll input 1323 based on a touch input 1321 is detected in the second area 520 of the display 230, the processor 240 may display a scroll bar 621 in a partial area of the second side surface 230b of the display 230 corresponding to the second area 520. The scroll bar 621 may include a first indicator 623 indicating a location of a portion of the screen 601 being displayed on the display 230 and/or a second indicator 1210 for displaying an uppermost area of the screen 601. In an embodiment, while a scroll input 1323 based on a touch input 1321 is detected, the processor 240 may remove display of at least one object (e.g., at least one first object 611 (e.g., an object for creating a new message, an object for searching for a message, and/or an object related to message settings) and/or at least one second object 613 (e.g., an object for displaying a chat window list screen, an object for displaying a contact screen)) from the display 230.

In an embodiment, when the scroll input 1323 is released, as illustrated in reference numeral <1330> of FIG. 13, the processor 240 may maintain display of the scroll bar 621, and may display at least one object (e.g., at least one first object 611 (e.g., an object for creating a new message, an object for searching for a message, and/or an object related to message settings) and/or at least one second object 613 (e.g., an object for displaying a chat window list screen, an object for displaying a contact screen)) that had been removed from the display 230 on the display 230.

In an embodiment, the processor 240 may detect a gesture at the first indicator 623 included in the scroll bar 621. For example, a user may move (e.g., move in an upward direction or a downward direction) the first indicator 623 in order to change an area where the screen 601 is displayed. In an embodiment, the gesture may include a gesture for selecting the first indicator 623 or a gesture for selecting and moving the first indicator 623 in a specific direction. While the gesture is detected, as illustrated in reference numeral <1340> of FIG. 13, the processor 240 may remove display of the second indicator 1210 (e.g., the second indicator 1210 for displaying the uppermost area of the screen 601) included in the scroll bar 621 from the display 230. In an embodiment, when the gesture is released, the processor 240 may display a portion of the screen 601 corresponding to the first indicator 623, and may display the second indicator 1210.

In FIG. 13 according to various embodiments, a state in which the scroll bar 621 is displayed in a partial area of the second side surface 230b of the display 230 has been described, but the present disclosure is not limited thereto. For example, even in a state where the scroll bar 621 is displayed in a partial area of the first side surface 230a of the display 230, it may be implemented and operated identically to the case of being displayed in the partial area of the second side surface 230b of the display 230 described above.

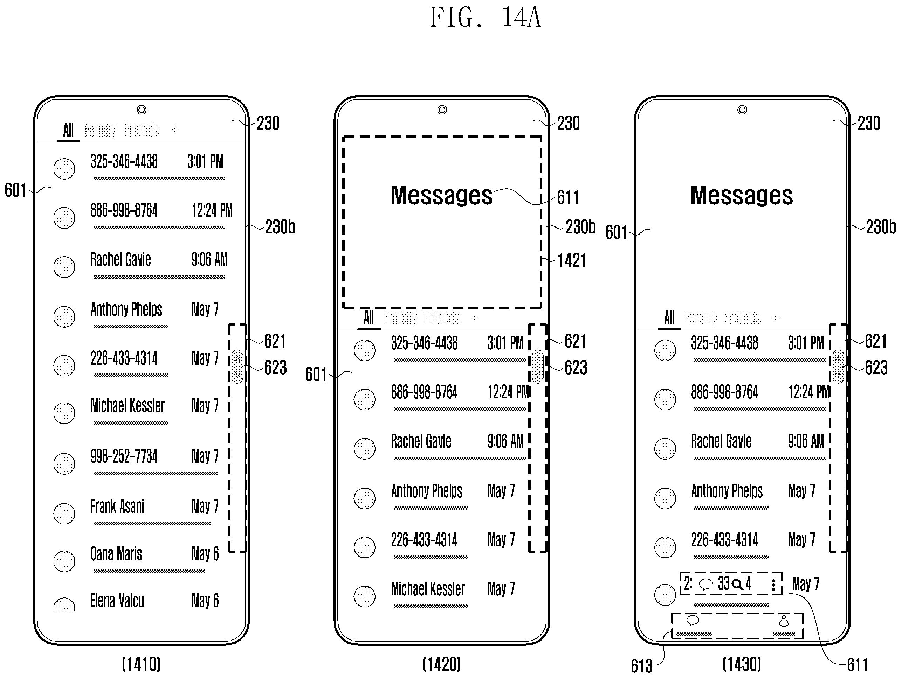

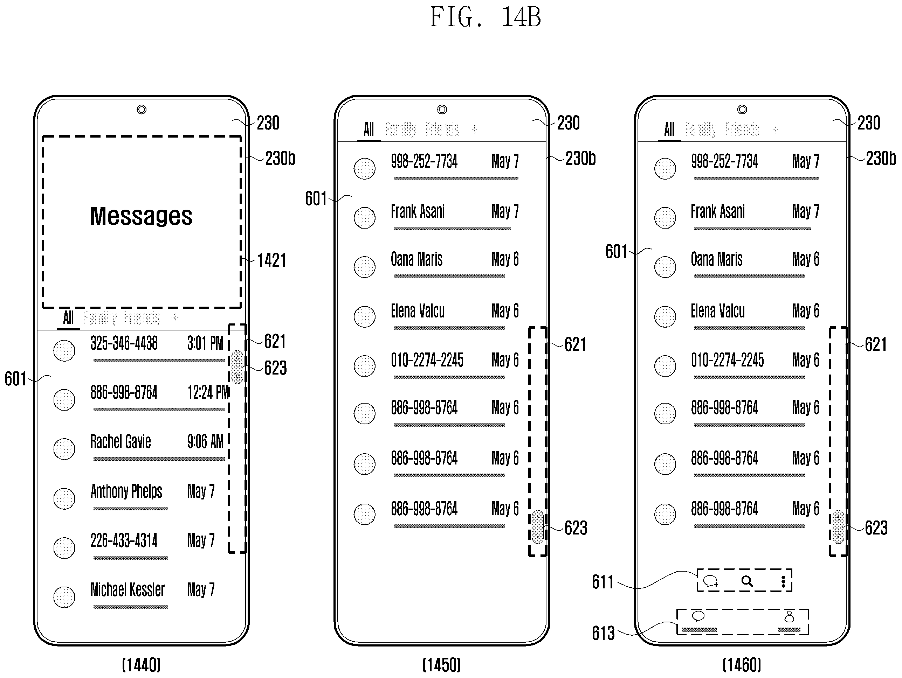

FIGS. 14A and 14B are views for explaining a method for displaying a scroll bar, according to an embodiment of the present disclosure.

With reference to reference numeral <1410> of FIG. 14A, a processor (e.g., the processor 240 of FIG. 2) of an electronic device (e.g., the electronic device 101 of FIG. 1) may display a portion of a screen 601 on a display (e.g., the display 230 of FIG. 2). For example, the screen 601 may be a screen related to a message application. In an embodiment, the scroll bar 621 may be in a state displayed in a partial area of the second side surface 230b of the display 230. The scroll bar 621 may include an indicator 623 for changing an area where the screen 601 is displayed.

In an embodiment, as illustrated in reference numeral <1420> of FIG. 14A, the processor 240 may detect a gesture for moving the first indicator 623 included in the scroll bar 621 in a specific direction (e.g., an upward direction or a downward direction). For example, based on detecting a gesture for moving the first indicator 623 to an uppermost end of the scroll bar 621, the processor 240 may display an uppermost area of the screen 601 on the display 230. For example, the uppermost area of the screen 601 may include title information 1421 (e.g., Messages) representing the message application and a message list.

As examined in reference numeral <1320> of FIG. 13 according to an embodiment, while a gesture for moving the first indicator 623 to an uppermost end of the scroll bar 621 is detected, display of at least one object (e.g., at least one first object 611 (e.g., an object for creating a new message, an object for searching for a message, and/or an object related to message settings) and/or at least one second object 613 (e.g., an object for displaying a chat window list screen, an object for displaying a contact screen)) may be removed from the display 230.

In an embodiment, after moving the first indicator 623 to the uppermost end of the scroll bar 621, when the gesture is released, as illustrated in reference numeral <1430> of FIG. 14A, the processor 240 maintains display of the scroll bar 621, and may display at least one object (e.g., at least one first object 611 (e.g., an object for creating a new message, an object for searching for a message, and/or an object related to message settings) and/or at least one second object 613 (e.g., an object for displaying a chat window list screen, an object for displaying a contact screen)) that had been removed from the display 230 on the display 230.

With reference to reference numeral <1440> of FIG. 14B, in a state where title information 1421 (e.g., Messages) representing the message application, which is a portion of the screen 601, and a portion of the message list are displayed, the processor 240 may detect a gesture for moving the first indicator 623 included in the scroll bar 621 in a specific direction (e.g., an upward direction or a downward direction). For example, based on detecting a gesture for moving the first indicator 623 to a lowermost end of the scroll bar 621, the processor 240 may, as illustrated in reference numeral <1450> of FIG. 14B, display a lowermost area of the screen 601 on the display 230.

As examined in reference numeral <1320> of FIG. 13 according to an embodiment, while a gesture for moving the first indicator 623 to the lowermost end of the scroll bar 621 is detected, display of at least one object (e.g., at least one first object 611 (e.g., an object for creating a new message, an object for searching for a message, and/or an object related to message settings) and/or at least one second object 613 (e.g., an object for displaying a chat window list screen, an object for displaying a contact screen)) may be removed from the display 230.

In an embodiment, after moving the first indicator 623 to the lowermost end of the scroll bar 621, when the gesture is released, as illustrated in reference numeral <1460> of FIG. 14B, the processor 240 maintains display of the scroll bar 621, and may display at least one object (e.g., at least one first object 611 (e.g., an object for creating a new message, an object for searching for a message, and/or an object related to message settings) and/or at least one second object 613 (e.g., an object for displaying a chat window list screen, an object for displaying a contact screen)) that had been removed from the display 230 on the display 230.

In FIG. 14A and FIG. 14B according to various embodiments, a state in which the scroll bar 621 is displayed in a partial area of the second side surface 230b of the display 230 has been described, but the present disclosure is not limited thereto. For example, even in a state where the scroll bar 621 is displayed in a partial area of the first side surface 230a of the display 230, it may be implemented and operated identically to the case of being displayed in the partial area of the second side surface 230b of the display 230.

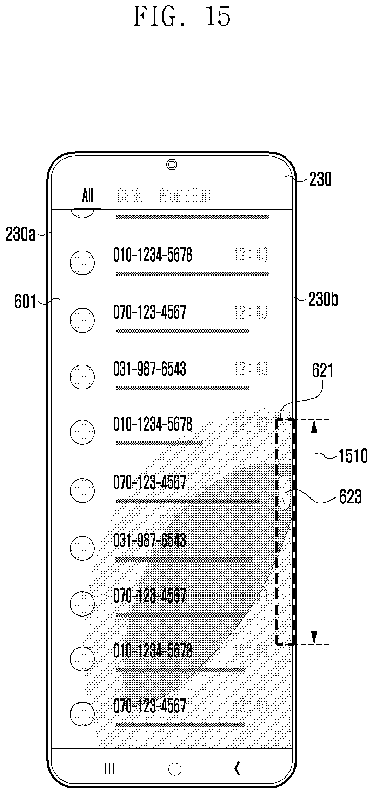

FIG. 15 is a view for explaining a method for displaying a scroll bar, according to an embodiment of the present disclosure.

With reference to FIG. 15, the processor (e.g., the processor 240 of FIG. 2) of the electronic device (e.g., the electronic device 101 of FIG. 1) may display a portion of the screen 601 on the display (e.g., the display 230 of FIG. 2).

In an embodiment, when a scroll input based on a touch input is detected, a state may be that the scroll bar 621 is displayed in a partial area of the second side surface 230b of the display 230 as the touch input is detected in the first area 510 or the third area 530 from among the plurality of areas (e.g., the first area 510, the second area 520, and the third area 530 of FIG. 5) of the display 230. The present disclosure is not limited thereto, and a state may be that the scroll bar 621 is displayed in the partial area of the second side surface 230b of the display 230 as the touch input is detected in the second area 520 or the third area 530 from among the plurality of areas (e.g., the first area 510, the second area 520, and the third area 530) of the display 230.

In an embodiment, the scroll bar 621 may include an indicator 623 for changing an area where the screen 601 is displayed.

In an embodiment, a length 1510 of the scroll bar 621 displayed in the partial area of the second side surface 230b (or a partial area of the first side surface 230a) of the display 230 may be preset. For example, the length 1510 of the scroll bar 621 may be preset based on a range which a finger of a user reaches. The present disclosure is not limited thereto, and the length 1510 of the scroll bar 621 displayed in the partial area of the second side surface 230b (or the partial area of the first side surface 230a) of the display 230 may be variable. For example, the processor 240 may identify a scroll range of a scroll input based on a touch input, and may set the length 1510 of the scroll bar 621 based on the scroll range.

In an embodiment, although not illustrated, a location where the scroll bar 621 is displayed (e.g., a location on a side surface of the display 230 where the scroll bar 621 is displayed) may also vary according to a range (e.g., a range in a y-axis direction of the display 230) in which a scroll input based on a touch input is detected.

As examined in FIGS. 3 to 15 according to various embodiments, the processor 240 may determine a partial area of a side surface of the display 230 where a scroll bar is displayed based on an area where a touch input is detected from among the plurality of areas (e.g., the first area 510, the second area 520, and the third area 530) of the touchscreen 230. For example, the partial area of the side surface of the display 230 corresponding to the area where the touch input for displaying the scroll bar is detected may be an area adjacent to a finger of a hand with which the user grips the electronic device 101. Accordingly, the user may easily perform an operation of scrolling the screen using the scroll bar.

The third area 530 among the plurality of areas (e.g., the first area 510, the second area 520, and the third area 530) of the display 230 according to various embodiments may be an area for maintaining a state in which the scroll bar is displayed in the partial area of the first side surface 230a of the display 230 or the partial area of the second side surface 230b of the display 230, when the scroll bar is displayed in the partial area of the first side surface 230a of the display 230 or the partial area of the second side surface 230b of the display 230 based on the touch input being detected in the first area 510 or the second area 520 of the display 230. Accordingly, when a second scroll input based on a second touch input is detected in the third area 530 from among the plurality of areas of the touchscreen 230 in a state where the scroll bar is displayed in the partial area of the side surface (e.g., the first side surface 230a or the second side surface 230b) of the display 230, the area where the scroll bar is displayed may be maintained. The processor 240 may prevent the area where the scroll bar is displayed from being changed even when the second scroll input based on the second touch input is incorrectly input in the third area 530 adjacent to the first area 510 or the second area 520 while the user performs the second scroll input based on the second touch input in the first area 510 or the second area 520 of the display 230, and accordingly, may provide a consistent user experience to the user.

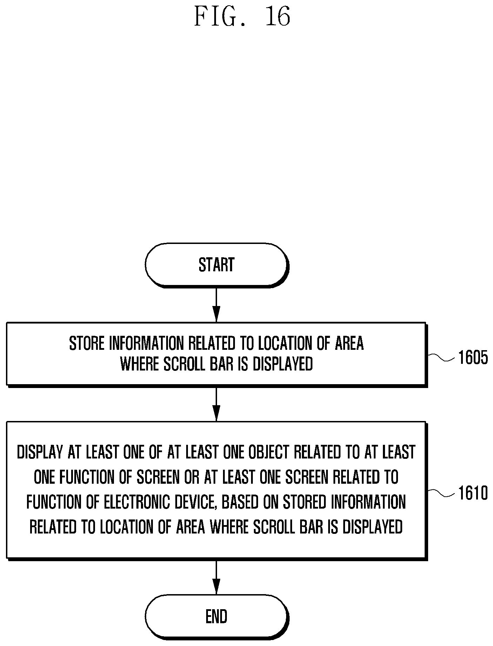

FIG. 16 is a flowchart for explaining a method for displaying at least one object related to at least one function of a screen and/or at least one screen related to a function of an electronic device based on an area where a scroll bar is displayed, according to an embodiment of the present disclosure.

In the following embodiments, each operation of FIG. 16 may be performed sequentially, but is not necessarily performed sequentially. For example, an order of each operation of FIG. 16 may be changed, and at least two operations may be performed in parallel.

According to an embodiment, it may be understood that operation 1605 and operation 1610 of FIG. 16 are performed in the processor (e.g., the processor 240 of FIG. 2) of the electronic device (e.g., the electronic device 101 of FIG. 1).

With reference to FIG. 16, in operation 1605, the processor 240 may store information related to a location of an area where a scroll bar is displayed in the memory (e.g., the memory 220 of FIG. 2). For example, the information related to the location of the area where the scroll bar is displayed may include information related to a state in which the scroll bar is displayed on the first side surface (e.g., the first side surface 230a of FIG. 5) of the display (e.g., the display 230 of FIG. 2) or information related to a state in which the scroll bar is displayed on the second side surface (e.g., the second side surface 230b of FIG. 5) of the display 230.

In an embodiment, the information related to the location of the area where the scroll bar is displayed may mean an area initially set (e.g., a partial area of the first side surface or a partial area of the second side surface of the display 230) to display the scroll bar based on a scroll input being detected. The information related to the location of the area where the scroll bar is displayed may be in a state pre-stored in the memory 220. The present disclosure is not limited thereto, and the information related to the location of the area where the scroll bar is displayed may include, when the area where the scroll bar is displayed is changed, information related to a location of the changed area where the scroll bar is displayed.

In an embodiment, in operation 1610, the processor 240 may, based on the stored information related to the location of the area where the scroll bar is displayed, display at least one of at least one object related to at least one function of a screen or at least one screen related to a function of the electronic device 101 on the display 230. For example, the at least one object related to at least one function of the screen may include the at least one first object 611 (e.g., an object for creating a new message, an object for searching for a message, and/or an object related to message settings) examined in FIG. 6 and/or the at least one second object 613 (e.g., an object for displaying a chat window list screen, an object for displaying a contact screen). The at least one screen related to the function of the electronic device 101 may include at least one screen related to a specific function displayed based on executing the specific function. The present disclosure is not limited thereto, and the at least one screen related to the function of the electronic device 101 may include at least one screen corresponding to at least one application.

In an embodiment, when the information related to the location of the area where the scroll bar is displayed includes information related to a state in which the scroll bar is displayed on the first side surface 230a of the display 230, the processor 240 may display at least one of at least one object related to at least one function of a screen or at least one screen related to a function of the electronic device 101 such that the same is biased toward the first side surface 230a of the display 230 based on the information related to the state in which the scroll bar is displayed on the first side surface 230a of the display 230.

In an embodiment, when the information related to the location of the area where the scroll bar is displayed includes information related to a state in which the scroll bar is displayed on the second side surface 230b of the display 230, the processor 240 may display at least one of at least one object related to at least one function of a screen or at least one screen related to a function of the electronic device 101 such that the same is biased toward the second side surface 230b of the display 230 based on the information related to the state in which the scroll bar is displayed on the second side surface 230b of the display 230.

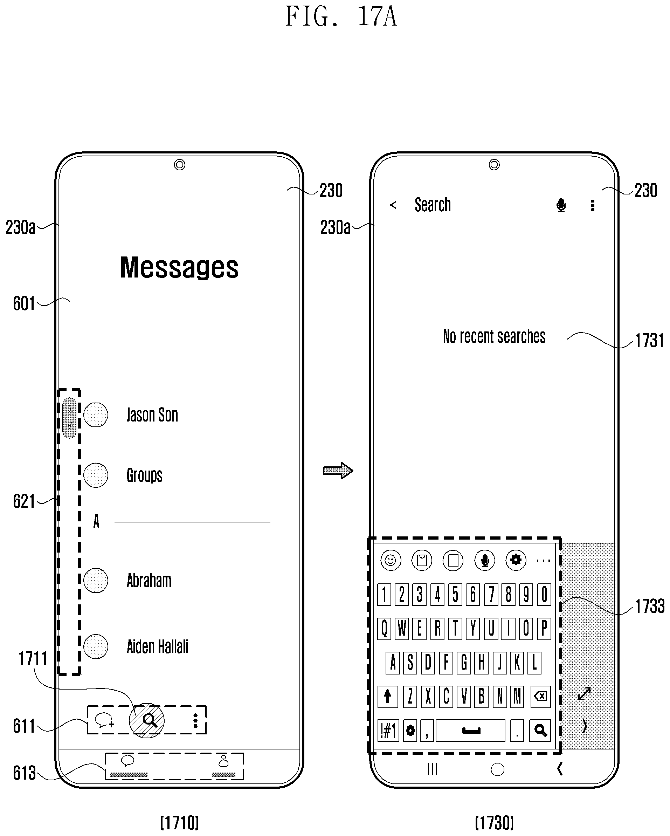

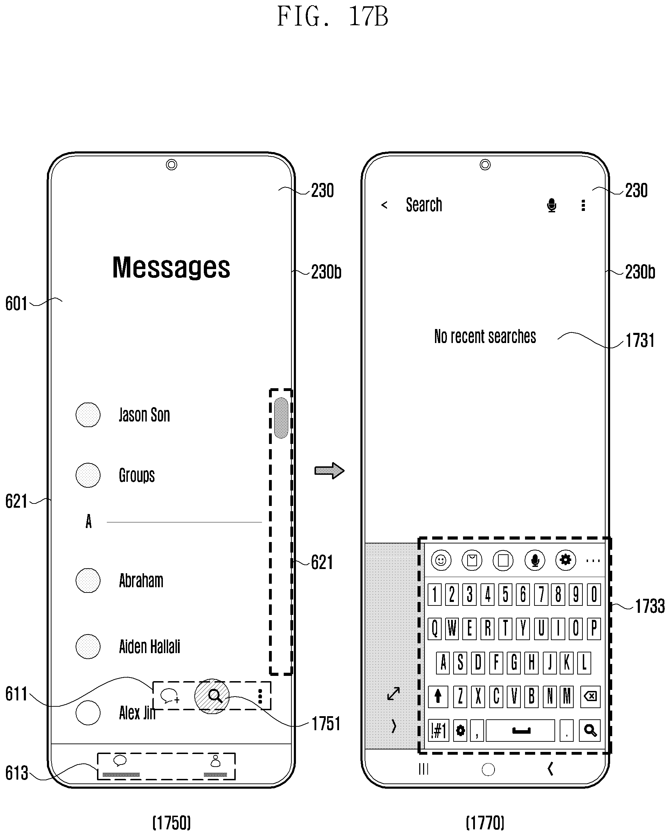

FIGS. 17A and 17B are views for explaining a method for displaying at least one object related to at least one function of a screen and/or at least one screen related to a function of an electronic device based on an area where a scroll bar is displayed, according to an embodiment of the present disclosure.

With reference to reference numeral <1710> of FIG. 17A, a processor (e.g., the processor 240 of FIG. 2) of an electronic device (e.g., the electronic device 101 of FIG. 1) may display a portion of a screen 601 on a display (e.g., the display 230 of FIG. 2). For example, the screen 601 may be a screen related to a message application. However, the present disclosure is not limited thereto.

In an embodiment, the scroll bar 621 may be in a state displayed in a partial area of the first side surface 230a of the display 230. In this case, information related to a location of the area where the scroll bar 621 is displayed (e.g., information related to a state in which the scroll bar 621 is displayed on the first side surface 230a of the display 230) may be in a state stored in the memory (e.g., the memory 220 of FIG. 2).

In an embodiment, the processor 240 may further display on the display 230, together with the screen 601, at least one object related to the screen 601 (e.g., at least one first object 611 (e.g., an object for creating a new message, an object for searching for a message, and/or an object related to message settings) and/or at least one second object 613 (e.g., an object for displaying a chat window list screen, an object for displaying a contact screen)).

In an embodiment, the processor 240 may, based on the information related to the location of the area where the scroll bar 621 is displayed stored in the memory 220 (e.g., information related to a state in which the scroll bar is displayed on the first side surface 230a of the display 230), display at least one object related to at least one function of a screen, for example, the at least one first object 611 and/or the at least one second object 613. For example, the processor 240 may, based on the information related to the state in which the scroll bar 621 is displayed on the first side surface 230a of the display 230 stored in the memory 220, display the at least one first object 611 and/or the at least one second object 613 such that the same is biased toward the first side surface 230a of the display 230.

The present disclosure is not limited thereto, and based on an input 1711 for selecting an object for searching for a message from among the at least one first object 611 being detected, the processor 240 may, as illustrated in reference numeral <1730>, display a screen 1731 related to message search including a keypad 1733 (or a keyboard, an input panel) for searching for a message on the display 230. In this case, the processor 240 may display the keypad 1733 for searching for a message such that the same is biased toward the first side surface 230a of the display 230 based on the information related to the state in which the scroll bar 621 is displayed on the first side surface 230a of the display 230 stored in the memory 220.

With reference to reference numeral <1750> of FIG. 17B, the scroll bar 621 may be in a state displayed in a partial area of the second side surface 230b of the display 230. In this case, information related to a location of the area where the scroll bar 621 is displayed (e.g., information related to a state in which the scroll bar 621 is displayed on the second side surface 230b of the display 230) may be in a state stored in the memory 220.

In an embodiment, the processor 240 may, based on the information related to the location of the area where the scroll bar 621 is displayed stored in the memory 220 (e.g., information related to a state in which the scroll bar is displayed on the second side surface 230b of the display 230), display at least one object related to at least one function of a screen, for example, the at least one first object 611 and/or the at least one second object 613. For example, the processor 240 may, based on the information related to the state in which the scroll bar 621 is displayed on the second side surface 230b of the display 230 stored in the memory 220, display the at least one first object 611 and/or the at least one second object 613 such that the same is biased toward the second side surface 230b of the display 230.

The present disclosure is not limited thereto, and based on an input 1751 for selecting an object for searching for a message from among the at least one first object 611 being detected, the processor 240 may, as illustrated in reference numeral <1770>, display a screen 1731 related to message search including a keypad 1733 (or a keyboard, an input panel) for searching for a message on the display 230. In this case, the processor 240 may display the keypad 1733 for searching for a message such that the same is biased toward the second side surface 230b of the display 230 based on the information related to the state in which the scroll bar 621 is displayed on the second side surface 230b of the display 230 stored in the memory 220.

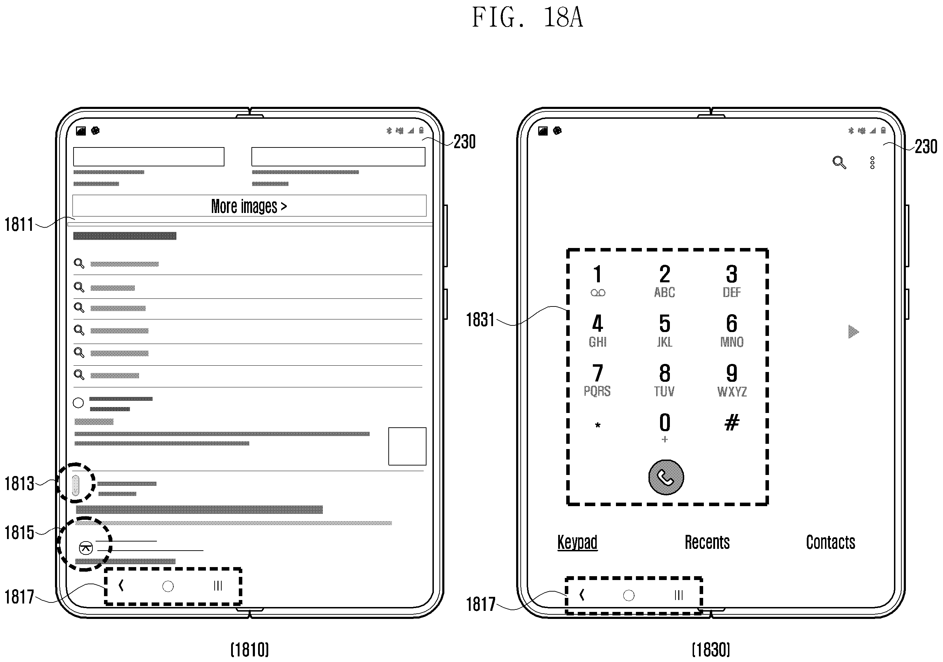

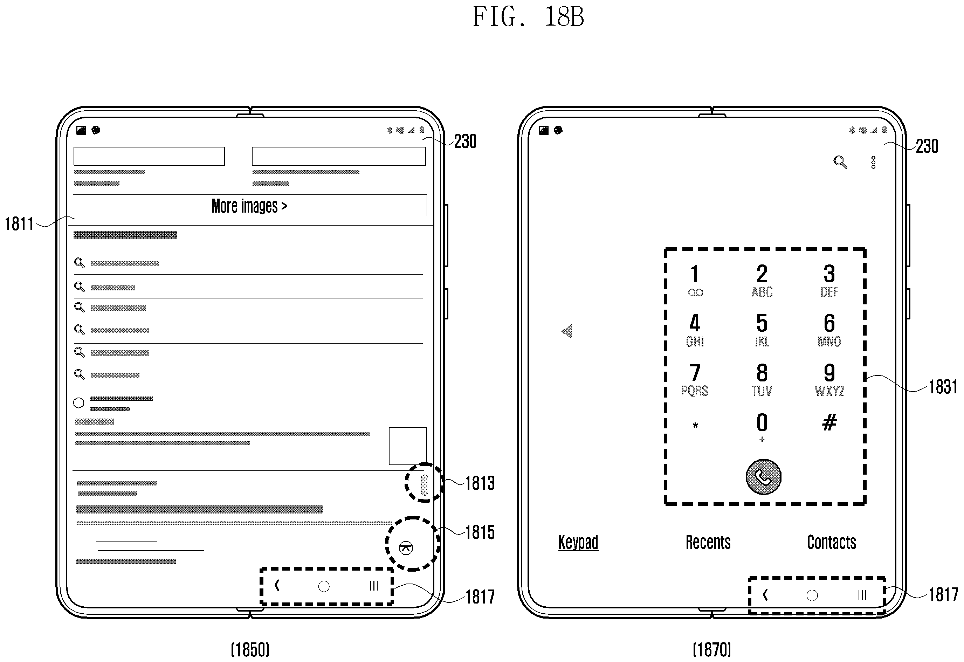

FIGS. 18A and 18B are views for explaining a method for displaying at least one object related to at least one function of a screen and/or at least one screen related to a function of an electronic device based on an area where a scroll bar is displayed, according to an embodiment of the present disclosure.

With reference to reference numeral <1810> of FIG. 18A, a processor (e.g., the processor 240 of FIG. 2) of an electronic device (e.g., the electronic device 101 of FIG. 1) may display a portion of a screen 1811 on a display (e.g., the display 230 of FIG. 2).

In an embodiment, the processor 240 may further display at least one object 1817 related to navigation on a bottom area of the display 230 together with the screen 1811. For example, the at least one object 1817 related to navigation may include an object for executing a menu (e.g., a menu button), an object for moving to a home screen (e.g., displaying the home screen) (e.g., a home button), and/or an object for returning to and displaying a previous screen (e.g., a back button). However, the present disclosure is not limited thereto.

In an embodiment, the scroll bar 1813 may be in a state displayed in a partial area of the first side surface 230a of the display 230. The present disclosure is not limited thereto, and the processor 240 may further display the indicator 1815 for displaying an uppermost area of the screen 1811 in the partial area of the first side surface 230a of the display 230.

In an embodiment, information related to a location of the area where the scroll bar 1813 is displayed (e.g., information that the scroll bar 1813 is displayed on the first side surface 230a of the display 230) may be in a state stored in the memory (e.g., the memory 220 of FIG. 2).

In an embodiment, the processor 240 may display the at least one object 1817 related to navigation based on the information related to the location of the area where the scroll bar 1813 is displayed stored in the memory 220 (e.g., information related to a state in which the scroll bar 1813 is displayed on the first side surface 230a of the display 230). For example, based on the information related to the state in which the scroll bar 1813 is displayed on the first side surface 230a of the display 230, the processor 240 may display the at least one object 1817 related to navigation such that the same is biased toward the first side surface 230a of the display 230.

The present disclosure is not limited thereto, and the processor 240 may also display a screen related to a function of the electronic device 101 based on the information related to the location of the area where the scroll bar 1813 is displayed stored in the memory 220 (e.g., information related to a state in which the scroll bar 1813 is displayed on the first side surface 230a of the display 230). For example, based on an input for executing a phone application being detected, the processor 240 may, as illustrated in reference numeral <1830> of FIG. 18A, display a screen of the phone application on the display 230. In this case, the processor 240 may display a dial screen 1831 such that the same is biased toward the first side surface 230a of the display 230 based on the information related to the state in which the scroll bar 1813 is displayed on the first side surface 230a of the display 230.

With reference to reference numeral <1850> of FIG. 18B, the scroll bar 1813 may be in a state displayed in a partial area of the second side surface 230b of the display 230. The present disclosure is not limited thereto, and the processor 240 may further display the indicator 1815 for displaying the uppermost area of the screen 1811 in the partial area of the second side surface 230b of the display 230.

In an embodiment, information related to a location of the area where the scroll bar 1813 is displayed (e.g., information related to a state in which the scroll bar 1813 is displayed on the second side surface 230b of the display 230) may be in a state stored in the memory 220.

In an embodiment, the processor 240 may display the at least one object 1817 related to navigation based on the information related to the location of the area where the scroll bar 1813 is displayed stored in the memory 220. For example, based on the information related to the state in which the scroll bar 1813 is displayed in the partial area of the second side surface 230b of the display 230, the processor 240 may display the at least one object 1817 related to navigation such that the same is biased toward the second side surface 230b of the display 230.

The present disclosure is not limited thereto, and the processor 240 may also display a screen related to a function of the electronic device 101 based on the information related to the location of the area where the scroll bar 1813 is displayed stored in the memory 220. For example, based on an input for executing a phone application being detected, the processor 240 may, as illustrated in reference numeral <1870> of FIG. 18B, display the screen of the phone application on the display 230. In this case, the processor 240 may display the dial screen 1831 such that the same is biased toward the second side surface 230b of the display 230 based on the information related to the state in which the scroll bar 1813 is displayed in the partial area of the second side surface 230b of the display 230.

As examined in FIGS. 16 to 18B according to various embodiments, the processor 240 may, based on the information related to the location of the area where the scroll bar is displayed stored in the memory 220, display at least one of at least one object related to at least one function of a screen or at least one screen related to a function of the electronic device 101 on the display 230. Accordingly, the user may easily control not only the scroll bar but also at least one object related to at least one function of the screen and/or at least one screen related to the function of the electronic device 101 by using a finger of the hand with which the electronic device 101 is gripped.

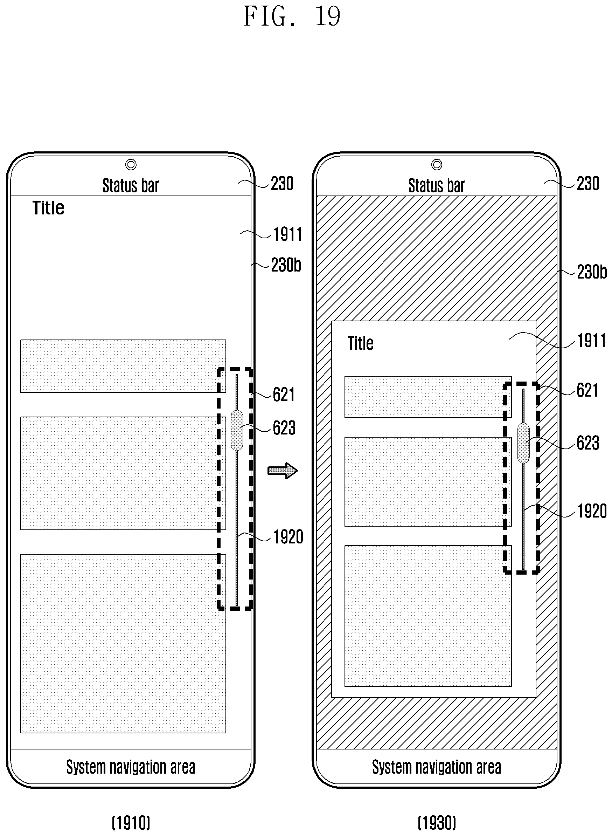

FIG. 19 is a view for explaining a method for displaying a scroll bar in a state where a size of a screen is reduced and displayed, according to an embodiment of the present disclosure.

FIG. 19 according to various embodiments is a view for explaining a method for displaying a scroll bar when the size of the screen is displayed on a display (e.g., the display 230 of FIG. 2) in a reduced state.

With reference to reference numeral <1910> of FIG. 19, a processor (e.g., the processor 240 of FIG. 2) of an electronic device (e.g., the electronic device 101 of FIG. 1) may display a portion of a screen 1911 on a display (e.g., the display 230 of FIG. 2). In an embodiment, a size (e.g., length) of a screen may be larger than a size (e.g., length) of the display 230, and accordingly, a state may be that a portion of an entire area of the screen is displayed on the display 230.

In an embodiment, the scroll bar 621 may be in a state displayed in a partial area of the second side surface 230b of the display 230. The scroll bar 621 may include a first indicator 623 indicating a location of the portion of the screen 1911 being displayed on the display 230 and/or a second indicator 1920 for identifying a relative location with respect to an entire operation section of the scroll bar 621.

In an embodiment, as illustrated in reference numeral <1930> of FIG. 19, the screen 1911 may be displayed on the display 230 in a state where the size is reduced. For example, based on a gesture (e.g., a zoom-in gesture) being detected, the processor 240 may display the portion of the screen 1911 having the reduced size on the display 230. In this case, based on information related to the state in which the scroll bar 621 is displayed in the partial area of the second side surface 230b of the display 230, the processor 240 may display the portion of the screen 1911 having the reduced size such that the same is biased toward the second side surface 230b of the display 230. As the portion of the screen 1911 is displayed in the reduced state, the processor 240 may adjust a length of the scroll bar 621 to be smaller than the length of the scroll bar 621 according to reference numeral <1910> and display the same on the display 230.

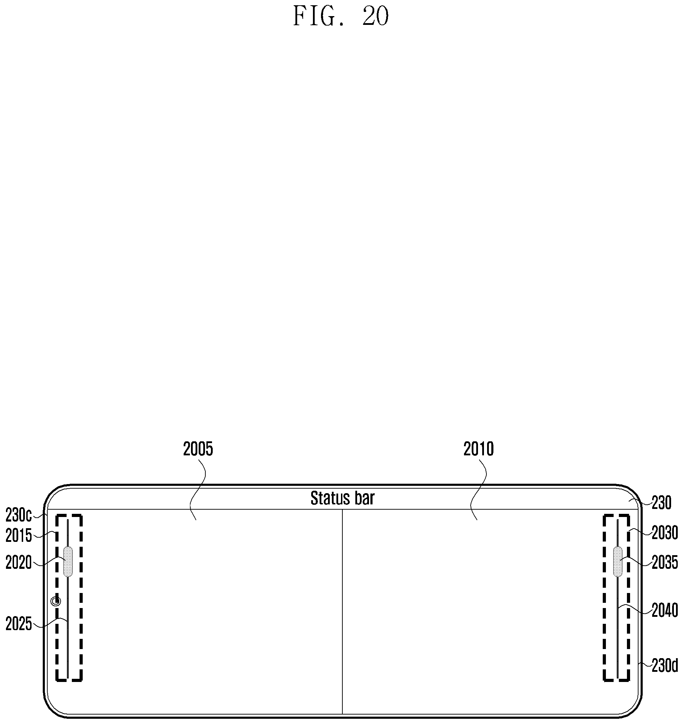

FIG. 20 is a view for explaining a method in which an electronic device 101 displays a scroll bar in a landscape mode, according to an embodiment of the present disclosure.

In FIGS. 3 to 19 according to various embodiments, it has been described that the electronic device (e.g., the electronic device 101 of FIG. 1) determines an area of the display 230 to display a scroll bar based on an area where a touch input is detected from among the plurality of areas of the display 230 in a portrait mode, but the present disclosure is not limited thereto.

In FIG. 20 according to an embodiment, when the electronic device 101 is in a landscape mode, the processor 240 may display the scroll bar in a designated area of the display (e.g., the display 230 of FIG. 2) regardless of whether a scroll input based on a touch input is detected.

In an embodiment, the processor (e.g., the processor 240 of FIG. 2) of the electronic device 101 may include a sensor circuit (e.g., the sensor module 176 of FIG. 1). The sensor circuit 176 may include an acceleration sensor, a terrestrial magnetic sensor, and/or a gyro sensor. The sensor circuit 176 may obtain movement information of the electronic device 101, and based on this, may detect rotation of the electronic device 101 to a predetermined angle (e.g., transition of an orientation of the electronic device 101, for example, transition from a portrait mode to a landscape mode, or transition from a landscape mode to a portrait mode).

With reference to FIG. 20, the processor 240 may display a plurality of screens corresponding to a plurality of applications on the display 230 when the electronic device 101 is in the landscape mode. The plurality of screens may include a first screen 2005 and a second screen 2010.

In an embodiment, the processor 240 may display a first scroll bar 2015 for controlling the first screen 2005 in a designated area of the display 230, for example, a partial area of a third side surface 230c. The first scroll bar 2015 may include a first indicator 2020 indicating a location of a portion of the first screen 2005 being displayed on the display 230 and/or a second indicator 2025 for identifying a relative location with respect to an entire operation section of the first scroll bar 2015.

In an embodiment, the processor 240 may display a second scroll bar 2030 for controlling the second screen 2010 in a designated area of the display 230, for example, a partial area of a fourth side surface 230d. The second scroll bar 2030 may include a third indicator 2035 indicating a location of a portion of the second screen 2010 being displayed on the display 230 and/or a fourth indicator 2040 for identifying a relative location with respect to an entire operation section of the second scroll bar 2030.

As examined in FIG. 20 according to an embodiment, when the electronic device 101 is in the landscape mode, the user may control the first screen 2005 and/or the second screen 2010 in a state of gripping the electronic device 101 using two hands. In this case, regardless of whether a scroll input based on a touch input is detected, by displaying the scroll bars 2015 and 2030 in designated areas (e.g., the partial area of the third side surface 230c and the partial area of the fourth side surface 230d) of the display 230, the user may easily control the scroll bars 2015 and 2030 by using a finger of each hand in the landscape mode of the electronic device 101.

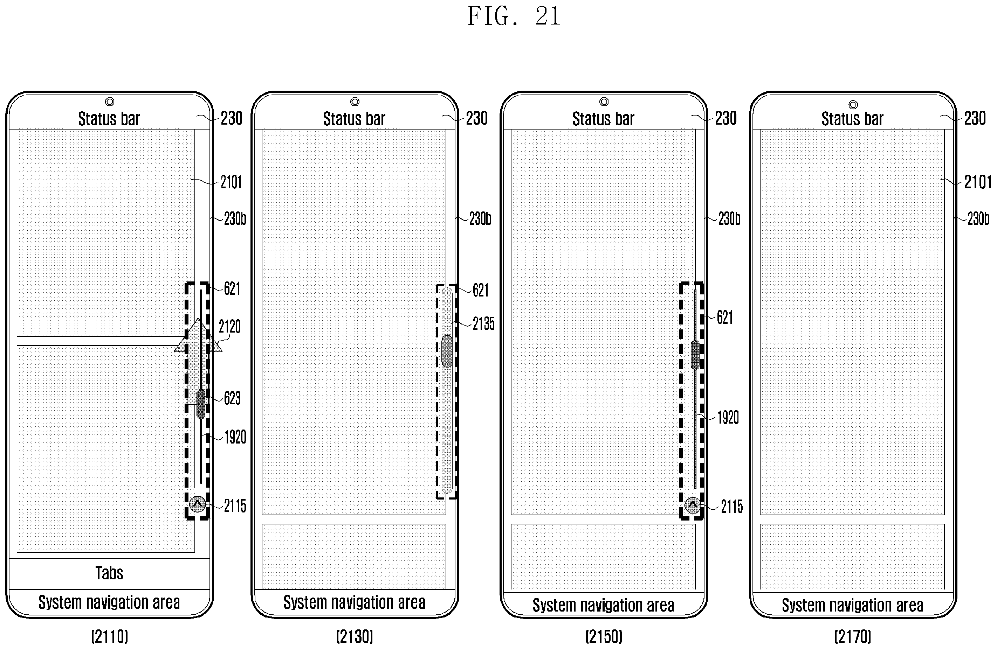

FIG. 21 is a view for explaining a method for displaying a scroll bar, according to an embodiment of the present disclosure.

With reference to reference numeral <2110> of FIG. 21, a processor (e.g., the processor 240 of FIG. 2) of an electronic device (e.g., the electronic device 101 of FIG. 1) may display a portion of a screen 2101 on a display (e.g., the display 230 of FIG. 2).

In an embodiment, as examined in FIG. 6B described above, a state may be that a scroll bar 621 is displayed on the second side surface 230b of the display 230 as a scroll input 633 based on a touch input 631 is detected in the second area 520 from among the plurality of areas (e.g., the first area 510, the second area 520, and the third area 530 of FIG. 5) of the display 230. The scroll bar 621 may include a first indicator 623 indicating a location of the portion of the screen 2101 being displayed on the display 230, a second indicator 1920 for identifying a relative location with respect to an entire operation section of the scroll bar 621, and/or a third indicator 2115 for displaying an uppermost area of the screen 2101.

In an embodiment, the processor 240 may, after selecting the first indicator 623 included in the scroll bar 621, detect a gesture 2120 for moving in a specific direction (e.g., an upward direction). Based on the gesture 2120 being detected, the processor 240 moves and displays the screen 2101 in the upward direction, and as illustrated in reference numeral <2130>, may display the second indicator 1920 included in the scroll bar 621 by applying a visual effect 2135 to the same. For example, the second indicator 1920 may be a solid line, and the visual effect 2135 may include a visual effect for thickening a thickness of the solid line. In an embodiment, while the gesture 2120 is detected, the third indicator 2115 included in the scroll bar 621 may not be displayed. However, the present disclosure is not limited thereto.

In an embodiment, when the gesture 2120 is released, as illustrated in reference numeral <2150>, the processor 240 may display the scroll bar 621 including the first indicator 623 indicating the location of the portion of the screen 2101 being displayed on the display 230, the second indicator 1920 for identifying the relative location with respect to the entire operation section of the scroll bar 621, and/or the third indicator 2115 (e.g., the third indicator 2115 from which the visual effect 2135 is removed) for displaying the uppermost area of the screen 2101.

In an embodiment, when a designated time has elapsed after the scroll bar 621 is displayed, the processor 240 may remove display of the scroll bar 621 from the display 230 as illustrated in reference numeral <2170>.

In various embodiments, a scroll bar may include a first type of scroll bar and a second type of scroll bar. For example, a first type of scroll bar may be a scroll bar displayed when a size (e.g., length) of a screen exceeds a designated magnification (e.g., approximately 3 times) compared to a size of the display 230. A second type of scroll bar may be a scroll bar displayed when a size (e.g., length) of a screen is less than a designated magnification (e.g., approximately 3 times) compared to a size of the display 230.

In various embodiments, although not illustrated, a first type of scroll bar and a second type of scroll bar may be changed and displayed based on characteristics of a screen.

For example, in a state where a second type of scroll bar is displayed as a size (e.g., length) of a screen is less than a designated magnification compared to a size of the display 230, when the size (e.g., length) of the screen is changed to a state exceeding the designated magnification compared to the size of the display 230, the processor 240 may change the same to a first type of scroll bar and display the same. For example, a case where the state is changed from being less than the designated magnification compared to the size of the display 230 to exceeding the designated magnification may include a case where messages exceed a designated number as messages are exchanged with a specific interlocutor. The present disclosure is not limited thereto, and a case where the state is changed from being less than the designated magnification compared to the size of the display 230 to exceeding the designated magnification may include a case where summary information is displayed as detailed information in response to selecting the summary information in a state where the summary information of contents within the screen is displayed.

As another example, in a state where a first type of scroll bar is displayed as a size (e.g., length) of a screen exceeds a designated magnification compared to a size of the display 230, when the size (e.g., length) of the screen is changed to a state less than the designated magnification compared to the size of the display 230, the processor 240 may change the same to a second type of scroll bar and display the same. For example, a case where the state is changed from exceeding the designated magnification compared to the size of the display 230 to being less than the designated magnification may include a case where messages become less than a designated number as some messages are deleted in a state including messages exchanged with a specific interlocutor. The present disclosure is not limited thereto, and a case where the state is changed from exceeding the designated magnification compared to the size of the display 230 to being less than the designated magnification may include a case where contents within the screen are displayed as summary information in a state where the same are displayed as detailed information.

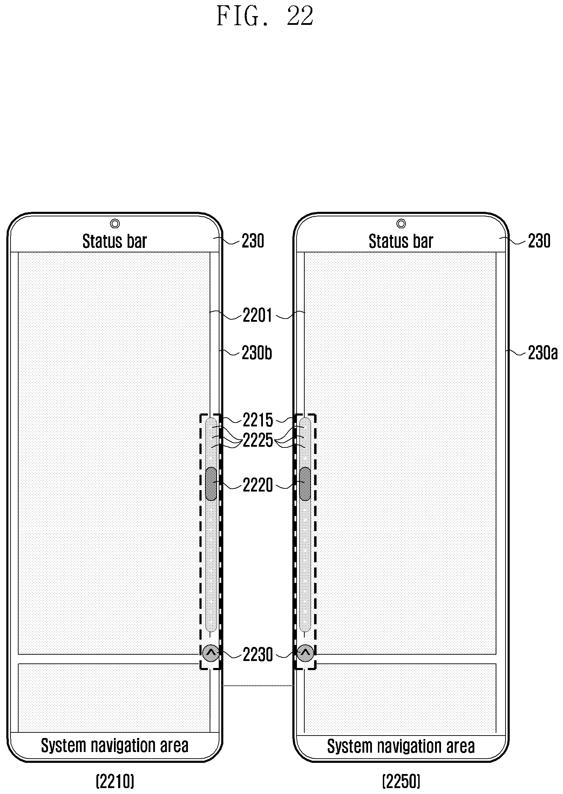

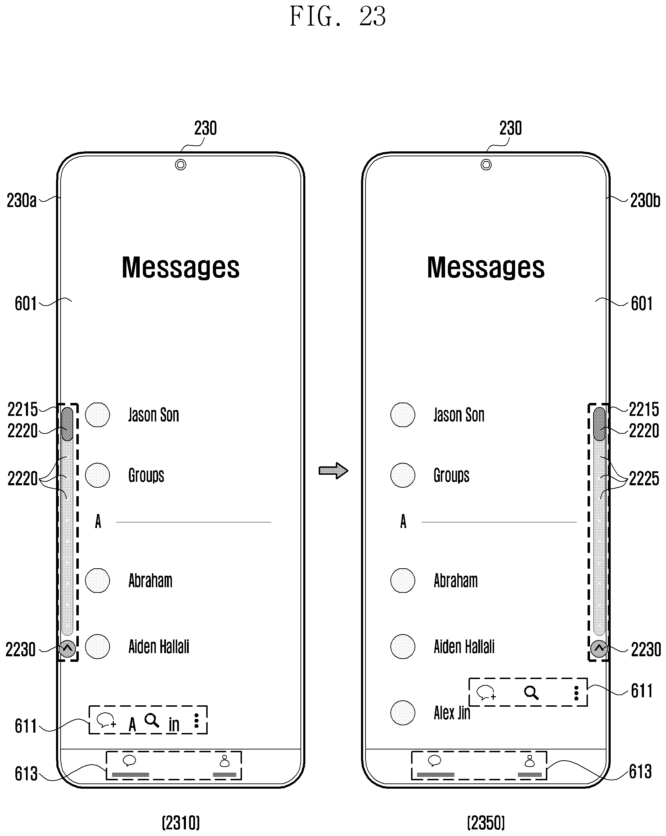

The present disclosure is not limited thereto, and a scroll bar may include a third type of scroll bar. For example, a third type of scroll bar may include an index scroll bar. In this regard, various embodiments will be described in FIG. 22 and FIG. 23 to be described later.

FIG. 22 is a view for explaining a method for displaying a third-type scroll bar, according to an embodiment of the present disclosure.

With reference to reference numerals <2210> and <2250> of FIG. 22, the processor (e.g., the processor 240 of FIG. 2) of the electronic device (e.g., the electronic device 101 of FIG. 1) may display a portion of a screen 2201 on the display (e.g., the display 230 of FIG. 2).

In an embodiment, the scroll bar 2215 may be in a state displayed in a partial area of the second side surface 230b of the display 230 or a partial area of the first side surface 230a.

The scroll bar 2215 displayed in FIG. 22 according to various embodiments may include a third-type scroll bar. The third-type scroll bar may include an index scroll bar. For example, the index scroll bar 2215 may be related to an initial consonant or a first vowel of names of contents included in the screen 2201. The present disclosure is not limited thereto, and the index scroll bar 2215 may also be related to titles of contents included in the screen 2201.

The index scroll bar 2215 according to an embodiment, as examined in FIGS. 3 to 21 described above, may be displayed in the partial area of the second side surface 230b of the display 230 or the partial area of the first side surface 230a when a scroll input based on a touch input is detected in the second area 520 or the first area 510 from among the plurality of areas (e.g., the first area 510, the second area 520, and the third area 530 of FIG. 5) of the display 230.

In an embodiment, the index scroll bar 2215 may include a first indicator 2220 indicating a location of a portion of the screen 2201 being displayed on the display 230 and/or a second indicator 2230 for displaying an uppermost area of the screen 2201. The present disclosure is not limited thereto, and the index scroll bar 2215 may further include a third indicator 2225 indicating an index value.

FIG. 23 is a view for explaining a method for displaying a third-type scroll bar, according to an embodiment of the present disclosure.

The scroll bar 2215 displayed in FIG. 23 according to various embodiments may include a third-type scroll bar. The third-type scroll bar may include an index scroll bar.

With reference to reference numeral <2310> of FIG. 23, a processor (e.g., the processor 240 of FIG. 2) of an electronic device (e.g., the electronic device 101 of FIG. 1) may display a portion of a screen 601 on a display (e.g., the display 230 of FIG. 2).

In an embodiment, the index scroll bar 2215 may be in a state displayed in a partial area of the first side surface 230a of the display 230. For example, the processor 240 may display the index scroll bar 2215 in the partial area of the first side surface 230a of the display 230 when a scroll input based on a touch input is detected in the first area 510 or the third area 530 from among the plurality of areas (e.g., the first area 510, the second area 520, and the third area 530 of FIG. 5) of the display 230.

In an embodiment, the index scroll bar 2215 may include a first indicator 2220 indicating a location of a portion of the screen 2201 being displayed on the display 230, a second indicator 2230 for displaying an uppermost area of the screen 2201, and/or a third indicator 2225 indicating an index value.

In an embodiment, information related to a location of an area where the index scroll bar 2215 is displayed (e.g., information related to a state in which the scroll bar 2215 is displayed on the first side surface 230a of the display 230) may be in a state stored in the memory (e.g., the memory 220 of FIG. 2).

In an embodiment, the processor 240 may, based on the information related to the location of the area where the index scroll bar 2215 is displayed stored in the memory 220 (e.g., information related to the state in which the index scroll bar 2215 is displayed on the first side surface 230a of the display 230), display at least one object related to at least one function of the screen 601, for example, the at least one first object 611 and/or the at least one second object 613. For example, based on the information related to the state in which the index scroll bar 2215 is displayed on the first side surface 230a of the display 230, the processor 240 may display the at least one first object 611 and/or the at least one second object 613 such that the same is biased toward the first side surface 230a of the display 230.

With reference to reference numeral <2350> of FIG. 23, the index scroll bar 2215 may be in a state displayed in a partial area of the second side surface 230b of the display 230. For example, the processor 240 may display the index scroll bar 2215 in the partial area of the second side surface 230b of the display 230 when a scroll input based on a touch input is detected in the second area 520 or the third area 530 from among the plurality of areas (e.g., the first area 510, the second area 520, and the third area 530) of the display 230.

In an embodiment, information related to a state in which the index scroll bar 2215 is displayed on the second side surface 230b of the display 230, which is information related to a location of an area where the index scroll bar 2215 is displayed, may be in a state stored in the memory 220.

In an embodiment, the processor 240 may, based on the information related to the location of the area where the index scroll bar 2215 is displayed stored in the memory 220 (e.g., information related to the state in which the index scroll bar 2215 is displayed on the second side surface 230b of the display 230), display at least one object related to at least one function of the screen 601, for example, the at least one first object 611 and/or the at least one second object 613. For example, based on the information related to the state in which the index scroll bar 2215 is displayed on the second side surface 230b of the display 230, the processor 240 may display the at least one first object 611 and/or the at least one second object 613 such that the same is biased toward the second side surface 230b of the display 230.

A scroll bar display method according to an embodiment of the present disclosure may include an operation of displaying a portion of a screen on a display 230. The scroll bar display method according to an embodiment may include an operation of, when a scroll input based on a touch input is detected, identifying an area where the touch input is detected from among a first area 510, a second area 520, and a third area 530 of the display 230. The scroll bar display method according to an embodiment may include an operation of, in case that the touch input is detected in the first area 510 of the display 230, displaying a scroll bar in a partial area of a first side surface 230a of the display 230 corresponding to the first area. The scroll bar display method according to an embodiment may include an operation of, in case that the touch input is detected in the second area 520 of the display 230, displaying a scroll bar in a partial area of a second side surface 230b of the display 230 corresponding to the second area. The scroll bar display method according to an embodiment may include an operation of, in case that the touch input is detected in the third area 530 of the display 230, displaying a scroll bar in a default area from among a partial area of the first side surface 230a and a partial area of the second side surface 230b of the display 230.

The scroll bar display method according to an embodiment may include an operation of, in a state where a scroll bar is displayed in a partial area of a first side surface 230a of a display 230, when a second scroll input based on a second touch input is detected, identifying whether a designated time has elapsed. The scroll bar display method according to an embodiment may include an operation of, in case that the designated time has not elapsed, identifying an area where the second touch input is detected from among the first area 510, the second area 520, and the third area 530 of the display 230. The scroll bar display method according to an embodiment may include an operation of, in case that the second touch input is detected in the first area 510, the second area 520, or the third area 530 of the display 230, maintaining a state in which the scroll bar is displayed in the partial area of the first side surface 230a of the display 230.

The scroll bar display method according to an embodiment may include an operation of, in case that the designated time has elapsed, removing display of the scroll bar from the partial area of the first side surface 230a of the display 230.

The scroll bar display method according to an embodiment may include an operation of, in a state where the designated time has elapsed, identifying an area where the second touch input is detected from among the first area 510, the second area 520, and the third area 530 of the display 230. The scroll bar display method according to an embodiment may include an operation of, in case that the second touch input is detected in the first area 510 of the display 230, maintaining an area to display the scroll bar as the partial area of the first side surface 230a of the display 230. The scroll bar display method according to an embodiment may include an operation of, in case that the second touch input is detected in the second area 520 of the display 230, changing an area to display the scroll bar to a partial area of the second side surface 230b of the display 230. The scroll bar display method according to an embodiment may include an operation of, in case that the second touch input is detected in the third area 530 of the display 230, maintaining an area to display the scroll bar as the partial area of the first side surface 230a of the display 230 based on location information of a scroll bar that had been displayed before the second scroll input based on the second touch input was detected.

The scroll bar display method according to an embodiment may include an operation of, in a state where a scroll bar is displayed in a partial area of a second side surface 230b of a display 230, when a second scroll input based on a second touch input is detected, identifying whether a designated time has elapsed. The scroll bar display method according to an embodiment may include an operation of, in case that the designated time has not elapsed, identifying an area where the second touch input is detected from among the first area 510, the second area 520, and the third area 530 of the display 230. The scroll bar display method according to an embodiment may include an operation of, in case that the second touch input is detected in the first area 510, the second area 520, or the third area 530 of the display 230, maintaining a state in which the scroll bar is displayed in a partial area of the second side surface 230b of the display 230.

The scroll bar display method according to an embodiment may include an operation of, in case that the designated time has elapsed, removing display of the scroll bar from the partial area of the second side surface 230b of the display 230.

The scroll bar display method according to an embodiment may include an operation of, in a state where the designated time has elapsed, identifying an area where the second touch input is detected from among the first area 510, the second area 520, and the third area 530 of the display 230. The scroll bar display method according to an embodiment may include an operation of, in case that the second touch input is detected in the first area 510 of the display 230, changing an area to display the scroll bar to the partial area of the first side surface 230a of the display 230. The scroll bar display method according to an embodiment may include an operation of, in case that the second touch input is detected in the second area 520 of the display 230, maintaining an area to display the scroll bar as the partial area of the second side surface 230b of the display 230. The scroll bar display method according to an embodiment may include an operation of, in case that the second touch input is detected in the third area 530 of the display 230, maintaining an area to display the scroll bar as the partial area of the second side surface 230b of the display 230 based on location information of a scroll bar that had been displayed before the second touch input was detected.

The third area 530 of the display 230 according to an embodiment may be an area for maintaining a state in which the scroll bar is displayed in the partial area of the first side surface 230a of the display 230 or the partial area of the second side surface 230b of the display 230, when the scroll bar is displayed in the partial area of the first side surface 230a of the display 230 or the partial area of the second side surface 230b of the display 230 based on detection of the touch input in the first area 510 or the second area 520 of the display 230.

A non-transitory computer-readable medium storing instructions which, when executed by the processor 240 of the electronic device 101 according to an embodiment of the present disclosure, cause the processor 240 to perform operations, may execute an operation of displaying a portion of a screen on a display 230. The non-transitory computer-readable medium storing instructions which, when executed by the processor 240 of the electronic device 101 according to an embodiment, cause the processor 240 to perform operations, may execute an operation of, when a scroll input based on a touch input is detected, identifying an area where the touch input is detected from among the first area 510, the second area 520, and the third area 530 of the display 230. The non-transitory computer-readable medium storing instructions which, when executed by the processor 240 of the electronic device 101 according to an embodiment, cause the processor 240 to perform operations, may execute an operation of, in case that the touch input is detected in the first area 510 of the display 230, displaying a scroll bar in the partial area of the first side surface 230a of the display 230 corresponding to the first area. The non-transitory computer-readable medium storing instructions which, when executed by the processor 240 of the electronic device 101 according to an embodiment, cause the processor 240 to perform operations, may execute an operation of, in case that the touch input is detected in the second area 520 of the display 230, displaying the scroll bar in the partial area of the second side surface 230b of the display 230 corresponding to the second area. The non-transitory computer-readable medium storing instructions which, when executed by the processor 240 of the electronic device 101 according to an embodiment, cause the processor 240 to perform operations, may execute an operation of, in case that the touch input is detected in the third area 530 of the display 230, displaying the scroll bar in a default area from among the partial area of the first side surface 230a and the partial area of the second side surface 230b of the display 230.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively," as "coupled with," "coupled to," "connected with," or "connected to" another element (e.g., a second element), it means that the element may be coupled with the other element directly (e.g., through wires), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101), comprising:
a display (230);
memory (220) storing instructions; and
a processor (240),
wherein the instructions, when executed by the processor (240), cause the electronic device (101) to:
display a portion of a screen on the display (230);
identify, when a scroll input based on a touch input is detected, an area on which the touch input is detected from among a first area (510), a second area (520), and a third area (530) of the display (230);
display, in case that the touch input is detected in the first area (510) of the display (230), a scroll bar on a partial area of a first side surface (230a) of the display (230) corresponding to the first area (510);
display, in case that the touch input is detected in the second area (520) of the display (230), the scroll bar on a partial area of a second side surface (230b) of the display (230) corresponding to the second area (520); and
display, in case that the touch input is detected in the third area (530) of the display (230), the scroll bar in a default area from among the partial area of the first side surface (230a) and the partial area of the second side surface (230b) of the display (230).

2. The electronic device (101) of claim 1, wherein the instructions, when executed by the processor (240), cause the electronic device (101) to:
identify, when a second scroll input based on a second touch input is detected, whether a designated time has elapsed, in a state where the scroll bar is displayed in the partial area of the first side surface (230a) of the display (230);
identify, in case that the designated time has not elapsed, an area where the second touch input is detected from among the first area (510), the second area (520), and the third area (530) of the display (230); and
maintain, in case that the second touch input is detected in the first area (510), the second area (520), or the third area (530) of the display (230), a state in which the scroll bar is displayed in the partial area of the first side surface (230a) of the display (230).

3. The electronic device (101) of claim 2, wherein the instructions, when executed by the processor (240), cause the electronic device (101) to:
remove, in case that the designated time has elapsed, display of the scroll bar from the partial area of the first side surface (230a) of the display (230);
identify, in a state where the designated time has elapsed, an area where the second touch input is detected from among the first area (510), the second area (520), and the third area (530) of the display (230);
maintain, in case that the second touch input is detected in the first area (510) of the display (230), an area to display the scroll bar as the partial area of the first side surface (230a) of the display (230);
change, in case that the second touch input is detected in the second area (520) of the display (230), an area to display the scroll bar to the partial area of the second side surface (230b) of the display (230); and
maintain, in case that the second touch input is detected in the third area (530) of the display (230), an area to display the scroll bar as the partial area of the first side surface (230a) of the display (230), based on location information of the scroll bar that had been displayed before the second scroll input based on the second touch input was detected.

4. The electronic device (101) of claim 3, wherein the instructions, when executed by the processor (240), cause the electronic device (101) to:
store, when the area to display the scroll bar is changed to the partial area of the second side surface (230b) of the display (230), information related to a location of the changed area where the scroll bar is displayed in the memory (220).

5. The electronic device (101) of any one of claims 1 to 4, wherein the instructions, when executed by the processor (240), cause the electronic device (101) to:
identify, when a second scroll input based on a second touch input is detected, whether a designated time has elapsed, in a state where the scroll bar is displayed in the partial area of the second side surface (230b) of the display (230);
identify, in case that the designated time has not elapsed, an area where the second touch input is detected from among the first area (510), the second area (520), and the third area (530) of the display (230); and
maintain, in case that the second touch input is detected in the first area (510), the second area (520), or the third area (530) of the display (230), a state in which the scroll bar is displayed in the partial area of the second side surface of the display (230).

6. The electronic device (101) of claim 5, wherein the instructions, when executed by the processor (240), cause the electronic device (101) to:
remove, in case that the designated time has elapsed, display of the scroll bar from the partial area of the second side surface (230b) of the display (230);
identify, in a state where the designated time has elapsed, an area where the second touch input is detected from among the first area (510), the second area (520), and the third area (530) of the display (230);
change, in case that the second touch input is detected in the first area (510) of the display (230), an area to display the scroll bar to the partial area of the first side surface (230a) of the display (230);
maintain, in case that the second touch input is detected in the second area (520) of the display (230), an area to display the scroll bar as the partial area of the second side surface (230b) of the display (230); and
maintain, in case that the second touch input is detected in the third area (530) of the display (230), an area to display the scroll bar as the partial area of the second side surface (230b) of the display (230) based on location information of the scroll bar that had been displayed before the second touch input was detected.

7. The electronic device (101) of claim 6, wherein the instructions, when executed by the processor (240), cause the electronic device (101) to:
store, when the area to display the scroll bar is changed to the partial area of the first side surface (230a) of the display (230), information related to a location of the changed area where the scroll bar is displayed in the memory (220).

8. The electronic device (101) of any one of claims 1 to 7, wherein the instructions, when executed by the processor (240), cause the electronic device (101) to:
display, based on information related to a location of an area where the scroll bar is displayed stored in the memory (220), at least one of at least one object related to at least one function of the screen or at least one screen related to a function of the electronic device (101) on the display (230).

9. The electronic device (101) of any one of claims 1 to 8, wherein:
a length of the scroll bar displayed in the partial area of the first side surface (230a) or the partial area of the second side surface (230b) of the display (230) is variable;
the first area (510), the second area (520), and the third area (530) of the display (230) do not overlap each other; and
the third area (530) of the display (230) is an area for maintaining a state in which the scroll bar is displayed in the partial area of the first side surface (230a) or the partial area of the second side surface (230b) of the display (230), when the scroll bar is displayed in the partial area of the first side surface (230a) or the partial area of the second side surface (230b) of the display (230) based on the touch input being detected in the first area (510) or the second area (520) of the display (230).

10. A scroll bar display method, comprising:
displaying a portion of a screen on a display (230);
identifying, when a scroll input based on a touch input is detected, an area where the touch input is detected from among a first area (510), a second area (520), and a third area (530) of the display (230);
displaying, in case that the touch input is detected in the first area (510) of the display (230), a scroll bar in a partial area of a first side surface (230a) of the display (230) corresponding to the first area;
displaying, in case that the touch input is detected in the second area (520) of the display (230), the scroll bar in a partial area of a second side surface (230b) of the display (230) corresponding to the second area; and
displaying, in case that the touch input is detected in the third area (530) of the display (230), the scroll bar in a default area from among the partial area of the first side surface (230a) and the partial area of the second side surface (230b) of the display (230).

11. The method of claim 10, further comprising:
identifying, when a second scroll input based on a second touch input is detected, whether a designated time has elapsed, in a state where the scroll bar is displayed in the partial area of the first side surface (230a) of the display (230);
identifying, in case that the designated time has not elapsed, an area where the second touch input is detected from among the first area (510), the second area (520), and the third area (530) of the display (230); and
maintaining, in case that the second touch input is detected in the first area (510), the second area (520), or the third area (530) of the display (230), a state in which the scroll bar is displayed in the partial area of the first side surface (230a) of the display (230).

12. The method of claim 11, further comprising:
removing, in case that the designated time has elapsed, display of the scroll bar from the partial area of the first side surface (230a) of the display (230);
identifying, in a state where the designated time has elapsed, an area where the second touch input is detected from among the first area (510), the second area (520), and the third area (530) of the display (230);
maintaining, in case that the second touch input is detected in the first area (510) of the display (230), an area to display the scroll bar as the partial area of the first side surface (230a) of the display (230);
changing, in case that the second touch input is detected in the second area (520) of the display (230), an area to display the scroll bar to the partial area of the second side surface (230b) of the display (230); and
maintaining, in case that the second touch input is detected in the third area (530) of the display (230), an area to display the scroll bar as the partial area of the first side surface (230a) of the display (230), based on location information of the scroll bar that had been displayed before the second scroll input based on the second touch input was detected.

13. The method of any one of claims 10 to 12, further comprising:
identifying, when a second scroll input based on a second touch input is detected, whether a designated time has elapsed, in a state where the scroll bar is displayed in the partial area of the second side surface (230b) of the display (230);
identifying, in case that the designated time has not elapsed, an area where the second touch input is detected from among the first area (510), the second area (520), and the third area (530) of the display (230); and
maintaining, in case that the second touch input is detected in the first area (510), the second area (520), or the third area (530) of the display (230), a state in which the scroll bar is displayed in the partial area of the second side surface of the display (230).

14. The method of claim 13, further comprising:
removing, in case that the designated time has elapsed, display of the scroll bar from the partial area of the second side surface (230b) of the display (230);
identifying, in a state where the designated time has elapsed, an area where the second touch input is detected from among the first area (510), the second area (520), and the third area (530) of the display (230);
changing, in case that the second touch input is detected in the first area (510) of the display (230), an area to display the scroll bar to the partial area of the first side surface (230a) of the display (230);
maintaining, in case that the second touch input is detected in the second area (520) of the display (230), an area to display the scroll bar as the partial area of the second side surface (230b) of the display (230); and
maintaining, in case that the second touch input is detected in the third area (530) of the display (230), an area to display the scroll bar as the partial area of the second side surface (230b) of the display (230) based on location information of the scroll bar that had been displayed before the second touch input was detected.

15. A non-transitory computer-readable medium storing instructions which, when executed by a processor (240) of an electronic device (101), cause the processor (240) to perform:
displaying a portion of a screen on a display (230);
identifying, when a scroll input based on a touch input is detected, an area where the touch input is detected from among a first area (510), a second area (520), and a third area (530) of the display (230);
displaying, in case that the touch input is detected in the first area (510) of the display (230), a scroll bar in a partial area of a first side surface (230a) of the display (230) corresponding to the first area;
displaying, in case that the touch input is detected in the second area (520) of the display (230), the scroll bar in a partial area of a second side surface (230b) of the display (230) corresponding to the second area; and
displaying, in case that the touch input is detected in the third area (530) of the display (230), the scroll bar in a default area from among the partial area of the first side surface (230a) and the partial area of the second side surface (230b) of the display (230).
